# EUROPEAN PATENT APPLICATION

(11) **EP 2 905 967 A1**
(43) Date of publication of application: **12.08.2015**
(21) Application number: 14806520.4
(22) Date of filing: 25.07.2014
(51) Int. Cl.: H04N 21/6587

(54) **METHOD FOR SWITCHING PLAYING DEVICE, AND MOBILE TERMINAL**

(30) Priority: 05.11.2013 CN 201310542840
(71) Applicant: Huawei Device Co., Ltd., Longgang District Shenzhen Guangdong 518129 (CN)
(72) Inventor: KUANG, Yunsheng, Shenzhen Guangdong 518129 (CN); ZHU, Yu, Shenzhen Guangdong 518129 (CN)
(74) Representative: Goddar, Heinz J.
(86) International application number: PCT/CN2014/082967
(87) International publication number: WO 2015/067072

(57) **Abstract**

Embodiments of the present invention disclose a method and a mobile terminal for switching a playback device. The method in the present invention includes: determining, by a mobile terminal, that the mobile terminal is moved from a first space in which the mobile terminal is located to a second space; acquiring an identifier and playback progress information of first multimedia content played by a first playback device; and sending, by the mobile terminal, to a second playback device, a playback command carrying the identifier and the playback progress information of the first multimedia content, where the playback command is used to trigger the second playback device to play the first multimedia content from a start point that is determined according to the playback progress information.

## Description

### CROSS-REFERENCE TO RELATED APPLICATION

This application claims priority to Chinese Patent Application No. 201310542840.6, filed with the Chinese Patent Office on November 5, 2013 and entitled "METHOD AND MOBILE TERMINAL FOR SWITCHING PLAYBACK DEVICE", which is incorporated herein by reference in its entirety.

### TECHNICAL FIELD

The present invention relates to the field of multimedia technologies, and in particular, to a method and a mobile terminal for switching a playback device.

### BACKGROUND

With increasing development of multimedia technologies, currently, a playback system formed by many playback devices already can be deployed in a limited space, to uniformly play multimedia content such as audio books, music, or videos in an indoor scenario with many rooms such as an apartment, an office building, or a hotel, so that people can receive information conveniently.

A central controller is disposed in a common playback system used currently, and each playback device in the playback system is connected to the central controller, so that the central controller controls content played by each playback device in the playback system. When the playback system is running, a playback device at a current location of a user is enabled to play multimedia content, and when the user needs to move from the current location to a target location, if it needs to be ensured that the currently played multimedia content is not interrupted, a playback device at the target location needs to be enabled by operating the central controller, to play the multimedia content, and the playback of the playback device at the current location needs to be stopped, thereby completing switching of the played multimedia content between different playback devices in the playback system.

Therefore, in the prior art, the user needs to switch the played multimedia content from a playback device to another playback device by means of manual operation, and when the switching is relatively frequent, the user also must frequently operate the central controller, which takes a lot of time of the user.

### SUMMARY

Embodiments of the present invention provide a method and a mobile terminal for switching a playback device, so that a mobile terminal can automatically switch a playback device during a displacement process, so that the playback device is switched automatically instead of manually, thereby improving a speed of switching the playback device, and also saving time for a user.

According to a first aspect, an embodiment of the present invention provides a method for switching a playback device, used in a mobile terminal, where the mobile terminal, at least one first playback device located in a first space, and at least one second playback device located in a second space form a wireless local area network, and the method includes:
determining, by the mobile terminal, that the mobile terminal is moved from the first space in which the mobile terminal is located to the second space, and acquiring an identifier and playback progress information of first multimedia content played by the first playback device; and
sending, by the mobile terminal, to the second playback device, a playback command carrying the identifier and the playback progress information of the first multimedia content, where the playback command is used to trigger the second playback device to play the first multimedia content from a start point that is determined according to the playback progress information.

With reference to the first aspect, in a first possible implementation manner of the first aspect, the wireless local area network further includes at least one wireless access point; and
the determining, by the mobile terminal, that the mobile terminal is moved from the first space in which the mobile terminal is located to the second space includes:
acquiring, by the mobile terminal, positioning information of a location of the mobile terminal by using a gyroscope, where the positioning information includes three-dimensional coordinates of the mobile terminal;
sending, by the mobile terminal, the positioning information to the wireless access point; and
receiving, by the mobile terminal, location information sent by the wireless access point, and determining, according to the location information, that the mobile terminal is moved from the first space in which the mobile terminal is located to the second space, where the location information is determined by the wireless access point according to the positioning information sent by the mobile terminal.

With reference to the first aspect, in a second possible implementation manner of the first aspect, the determining, by the mobile terminal, that the mobile terminal is moved from the first space in which the mobile terminal is located to the second space includes:
acquiring, by the mobile terminal, displacement information in a specified time period by using a gyroscope, and acquiring a map model according to the displacement information, where the map model is used to indicate topographic data of an indoor space in which the mobile terminal is located;
acquiring, by the mobile terminal, positioning information of a location of the mobile terminal by using the gyroscope, where the positioning information includes three-dimensional coordinates of the mobile terminal; and
determining, by the mobile terminal according to the positioning information and the map model, that the mobile terminal is moved from the first space in which the mobile terminal is located to the second space.

With reference to the first aspect, the first possible implementation manner of the first aspect, or the second possible implementation manner of the first aspect, before the sending, by the mobile terminal, to the second playback device, a playback command carrying the identifier and the playback progress information of the first multimedia content, the method further includes:
sending, by the mobile terminal, a wake-up command to the second playback device, where the wake-up command is used to wake the second playback device up.

With reference to the first aspect, the first possible implementation manner of the first aspect, or the second possible implementation manner of the first aspect, before the sending, by the mobile terminal, to the second playback device, a playback command carrying the identifier and the playback progress information of the first multimedia content, the method further includes:
sending, by the mobile terminal, a turn-off command to the first playback device, where the turn-off command is used to trigger the first playback device to turn down playback volume in a preset time period until the playback volume is zero.

With reference to the first aspect or any one of the possible implementation manners of the first aspect, that the playback command is used to trigger the second playback device to play the first multimedia content from a start point that is determined according to the playback progress information includes:
the playback command is used to trigger the second playback device to determine that a second time point obtained by subtracting preset duration from a first time point after the first time point is acquired by the second playback device according to the playback progress information is the start point, and trigger the second playback device to play the first multimedia content from the start point.

With reference to the first aspect or any one of the possible implementation manners of the first aspect, the acquiring, by the mobile terminal, an identifier and playback progress information of first multimedia content played by the first playback device includes:
acquiring, by the mobile terminal from a server or another mobile terminal, the identifier and the playback progress information of the first multimedia content played by the first playback device; or,
acquiring, by the mobile terminal from the mobile terminal or by using an Internet resource, the identifier and the playback progress information of the first multimedia content played by the first playback device.

With reference to the first aspect or any one of the possible implementation manners of the first aspect, the determining, by the mobile terminal, that the mobile terminal is moved from the first space in which the mobile terminal is located to the second space includes:
sending, by the mobile terminal, a scan request message when receiving a broadcast message, where the broadcast information is broadcast by the second playback device; and
receiving, by the mobile terminal, a scan response message, and determining, according to the scan response message, that the mobile terminal is moved from the first space in which the mobile terminal is located to the second space, where the scan response message is generated and sent by the second playback device according to the scan request message.

With reference to the first aspect or any one of the possible implementation manners of the first aspect, at least two base stations exist in the first space and the second space, where a first base station is located in the first space, and a second base station is located in the second space, and the map model is further used to indicate an indoor location of a base station; and
the determining, by the mobile terminal, that the mobile terminal is moved from the first space in which the mobile terminal is located to the second space includes:
receiving, by the mobile terminal, a second broadcast frame sent by the second base station, where the second broadcast frame carries an identifier of the second base station; and
determining, by the mobile terminal according to the second broadcast frame and the map model, that the mobile terminal is moved from the first space in which the mobile terminal is located to the second space.

With reference to any one of the possible implementation manners of the first aspect, before the determining, by the mobile terminal, that the mobile terminal is moved from the first space to the second space, the method further includes:
receiving, by the mobile terminal, a first broadcast frame sent by the first base station, where the first broadcast frame carries an identifier of the first base station; and
determining, by the mobile terminal according to the first broadcast frame and the map model, that the mobile terminal is located in the first space.

With reference to the first aspect or any one of the possible implementation manners of the first aspect, at least two base stations exist in the first space and the second space, where a first base station is located in the first space, and a second base station is located in the second space; and
the determining, by the mobile terminal, that the mobile terminal is moved from the first space in which the mobile terminal is located to the second space includes:
sending, by the mobile terminal, a third broadcast frame, where the third broadcast frame carries an identifier and an address of the mobile terminal; and
receiving, by the mobile terminal, location information of second base station sent by the second base station, and determining, according to location information of second base station, that the mobile terminal is moved from the first space in which the mobile terminal is located to the second space, where the location information of the second base station is sent by the second base station when the second base station receives the third broadcast frame.

With reference to any one of the possible implementation manners of the first aspect, before the determining, by the mobile terminal, that the mobile mobile terminal is moved from the first space to the second space, the method further includes:
sending, by the mobile terminal, the third broadcast frame; and
receiving, by the mobile terminal, location information of the first base station sent by the first base station, and determining, according to the location information of the first base station, that the mobile terminal is located in the first space, where the location information of the first base station is sent by the first base station when the first base station receives the third broadcast frame.

According to a second aspect, an embodiment of the present invention further provides a method for switching a playback device, used in a mobile terminal, where the mobile terminal, at least one first playback device located in a first space, and at least one second playback device located in a second space form a wireless local area network, and the method includes:
generating, by the mobile terminal, multimedia playback data, where the multimedia playback data is multimedia content currently played by the mobile terminal;
determining, by the mobile terminal, that the mobile terminal is located in the first space, and sending the multimedia playback data to the first playback device, so that the first playback device plays the multimedia content currently played by the mobile terminal; and
determining, by the mobile terminal, that the mobile terminal is moved from the first space in which the mobile terminal is located to the second space, and sending the multimedia playback data to the second playback device, so that the second playback device plays the multimedia content currently played by the mobile terminal.

According to a third aspect, an embodiment of the present invention provides a mobile terminal, where the mobile terminal, at least one first playback device located in a first space, and at least one second playback device located in a second space form a wireless local area network, and the mobile terminal includes:
a positioning module, configured to determine a location of the mobile terminal;
an acquiring module, configured to determine, by using the positioning module, that the mobile terminal is moved from the first space in which the mobile terminal is located to the second space, and acquire an identifier and playback progress information of first multimedia content played by the first playback device; and
a sending module, configured to send, to the second playback device, a playback command carrying the identifier and the playback progress information of the first multimedia content, where the playback command is used to trigger the second playback device to play the first multimedia content from a start point that is determined according to the playback progress information.

With reference to the third aspect, in a first possible implementation manner of the third aspect, the wireless local area network further includes at least one wireless access point; and
the positioning module includes:
a first acquiring unit, configured to acquire positioning information of the location of the mobile terminal by using a gyroscope, where the positioning information includes three-dimensional coordinates of the mobile terminal;
a sending unit, configured to send the positioning information acquired by the first acquiring, unit to the wireless access point;
a receiving unit, configured to receive location information sent by the wireless access point, where the location information is determined by the wireless access point according to the positioning information sent by the mobile terminal; and
a first determining unit, configured to determine the location of the mobile terminal according to the location information received by the receiving unit.

With reference to the third aspect, in a second possible implementation manner of the third aspect, the positioning module includes:
a second acquiring unit, configured to acquire displacement information in a specified time period by using a gyroscope, and acquire a map model according to the displacement information, where the map model is used to indicate topographic data of an indoor space in which the mobile terminal is located;
a third acquiring unit, configured to acquire positioning information of the location of the mobile terminal by using the gyroscope, where the positioning information includes three-dimensional coordinates of the mobile terminal; and
a second determining unit, configured to determine the location of the mobile terminal according to the map model acquired by the second acquiring unit and the positioning information acquired by the third acquiring unit.

With reference to the third aspect, the first possible implementation manner of the third aspect, or the first possible implementation manner of the third aspect, the sending unit is further configured to: before sending, to the second playback device, the playback command carrying the identifier and the playback progress information of the first multimedia content, send a wake-up command to the second playback device, where the wake-up command is used to wake the second playback device up.

With reference to the third aspect, the first possible implementation manner of the third aspect, or the first possible implementation manner of the third aspect, the sending unit is further configured to: before sending, to the second playback device, the playback command carrying the identifier and the playback progress information of the first multimedia content, send a turn-off command to the first playback device, where the turn-off command is used to trigger the first playback device to turn down playback volume in a preset time period until the playback volume is zero.

With reference to the third aspect or any one of the possible implementation manners of the third aspect, that the playback command is used to trigger the second playback device to play the first multimedia content from a start point that is determined according to the playback progress information includes:
the playback command is used to trigger the second playback device to determine that a second time point obtained by subtracting preset duration from a first time point after the first time point is acquired by the second playback device according to the playback progress information is the start point, and trigger the second playback device to play the first multimedia content from the start point.

With reference to the third aspect or any one of the possible implementation manners of the third aspect, the acquiring an identifier and playback progress information of first multimedia content played by the first playback device includes:
acquiring, from a server or another mobile terminal, the identifier and the playback progress information of the first multimedia content played by the first playback device; or,
acquiring, from the mobile terminal or by using an Internet resource, the identifier and the playback progress information of the first multimedia content played by the first playback device.

With reference to the third aspect or any one of the possible implementation manners of the third aspect, the positioning module includes:
a request sending unit, configured to send a scan request message when a broadcast message is received, where the broadcast information is broadcast by the second playback device; and
a third determining unit, configured to receive a scan response message, and determine, according to the scan response message, that the mobile terminal is moved from the first space in which the mobile terminal is located to the second space, where the scan response message is generated and sent by the second playback device according to the scan request message.

With reference to the third aspect or any one of the possible implementation manners of the third aspect, at least two base stations exist in the first space and the second space, where a first base station is located in the first space, and a second base station is located in the second space, and the map model is further used to indicate an indoor location of a base station; and
the positioning module includes:
a first receiving unit, configured to receive a second broadcast frame sent by the second base station, where the second broadcast frame carries an identifier of the second base station; and
a fourth determining unit, configured to determine, according to the second broadcast frame received by the first receiving unit and the map model, that the mobile terminal is moved from the first space in which the mobile terminal is located to the second space.

With reference to any one of the possible implementation manners of the third aspect, the positioning module further includes:
a second receiving unit, configured to receive a first broadcast frame sent by the first base station, where the first broadcast frame carries an identifier of the first base station; and
a fifth determining unit, configured to determine, according to the first broadcast frame received by the second receiving unit and the map model, that the mobile terminal is located in the first space.

With reference to the third aspect or any one of the possible implementation manners of the third aspect, at least two base stations exist in the first space and the second space, where a first base station is located in the first space, and a second base station is located in the second space; and
the positioning module includes:
a first sending unit, configured to send a third broadcast frame, where the third broadcast frame carries an identifier and an address of the mobile terminal; and
a sixth determining unit, configured to receive location information of the second base station sent by the second base station, and determine, according to the location information of the second base station, that the mobile terminal is moved from the first space in which the mobile terminal is located to the second space, where the location information of the second base station is sent by the second base station when the second base station receives the third broadcast frame.

With reference to any one of the possible implementation manners of the third aspect, the positioning module further includes:
a second sending unit, configured to send the third broadcast frame; and
a seventh determining unit, configured to receive location information of the first base station sent by the first base station, and determine, according to the location information of the first base station, that the mobile terminal is located in the first space, where the location information of the first base station is sent by the first base station when the first base station receives the third broadcast frame.

According to a fourth aspect, an embodiment of the present invention further provides a mobile terminal, where the mobile terminal, at least one first playback device located in a first space, and at least one second playback device located in a second space form a wireless local area network, and the mobile terminal includes:
a data generating module, configured to generate multimedia playback data, where the multimedia playback data is multimedia content currently played by the mobile terminal;
a first data sending module, configured to determine that the mobile terminal is located in the first space, and send the multimedia playback data to the first playback device, so that the first playback device plays the multimedia content currently played by the mobile terminal; and
a second data sending module, configured to determine that the mobile terminal is moved from the first space in which the mobile terminal is located to the second space, and send the multimedia playback data to the second playback device, so that the second playback device plays the multimedia content currently played by the mobile terminal.

According to the method and the mobile terminal for switching a playback device provided by the embodiments of the present invention, a mobile terminal can automatically switch a playback device during a displacement process, which prevents the playback device from being switched by means of manual operation, so that the playback device is switched automatically instead of manually, thereby improving a speed of switching the playback device, and also saving time for a user.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for switching a playback device according to an embodiment of the present invention;
FIG. 1a, FIG. 1b, FIG. 1c, and FIG. 1d are schematic diagrams of specific examples according to an embodiment of the present invention;
FIG. 1e is a flowchart of an implementation manner of a method for switching a playback device according to an embodiment of the present invention;
FIG. 2 is a flowchart of another method for switching a playback device according to an embodiment of the present invention;
FIG. 2a is a schematic diagram of a specific example of another method for switching a playback device according to an embodiment of the present invention;
FIG. 2b is a flowchart of another method for switching a playback device according to an embodiment of the present invention;
FIG. 2c is a flowchart of another method for switching a playback device according to an embodiment of the present invention;
FIG. 2d is a schematic diagram of a specific example of another method for switching a playback device according to an embodiment of the present invention;
FIG. 2e is a flowchart of another method for switching a playback device according to an embodiment of the present invention;
FIG. 3 is a flowchart of still another method for switching a playback device according to an embodiment of the present invention;
FIG. 4 is a schematic flowchart of a specific implementation manner of a method for switching a playback device according to an embodiment of the present invention;
FIG. 4a is a flowchart of yet another method for switching a playback device according to an embodiment of the present invention;
FIG. 4b is a schematic principle diagram of a Wi-Fi display technology according to an embodiment of the present invention;
FIG. 5 is a schematic structural diagram of a mobile terminal according to an embodiment of the present invention;
FIG. 6 and FIG. 7 are schematic structural diagrams of specific implementation manners of a mobile terminal according to an embodiment of the present invention;
FIG. 7a, FIG. 7b, and FIG. 7c are schematic structural diagrams of specific implementation manners of a mobile terminal according to an embodiment of the present invention;
FIG. 7d is a schematic structural diagram of a mobile terminal according to an embodiment of the present invention;
FIG. 8 is a schematic structural diagram of a control node device according to an embodiment of the present invention; and
FIG. 9 is a schematic structural diagram of a mobile terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

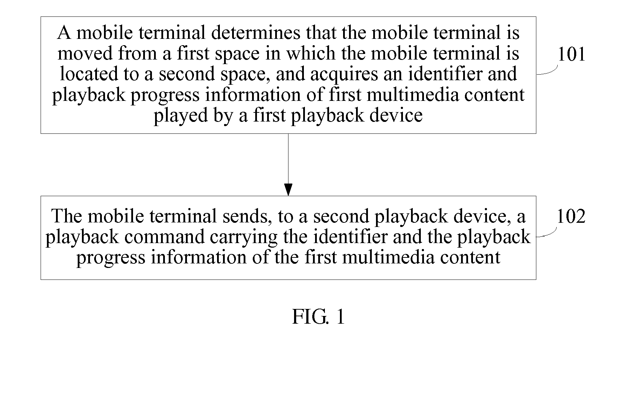

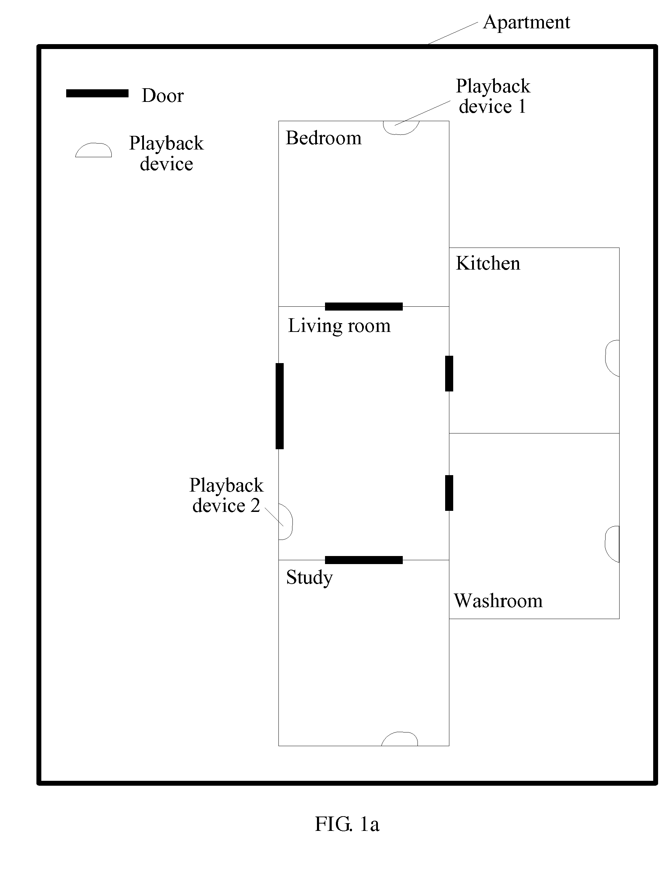

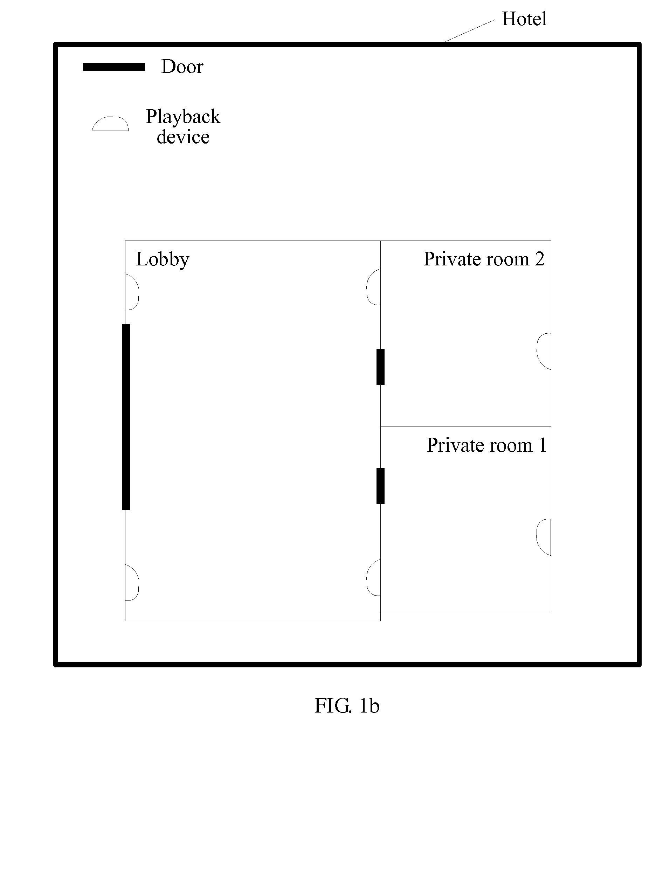

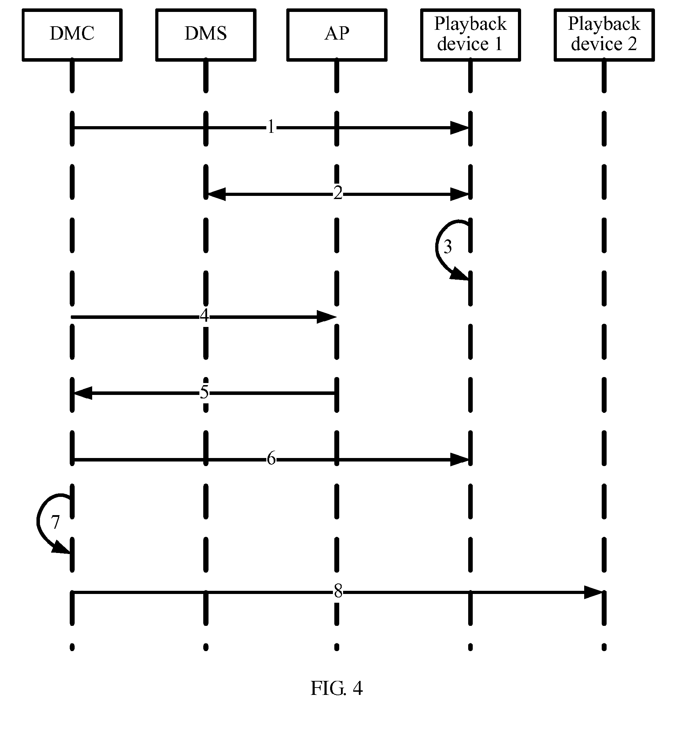

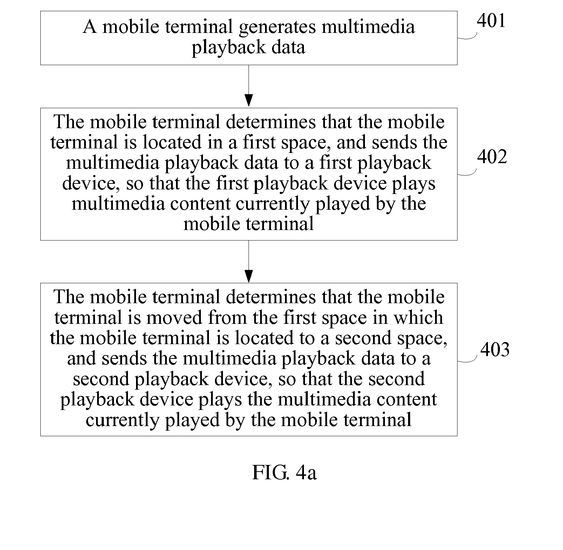

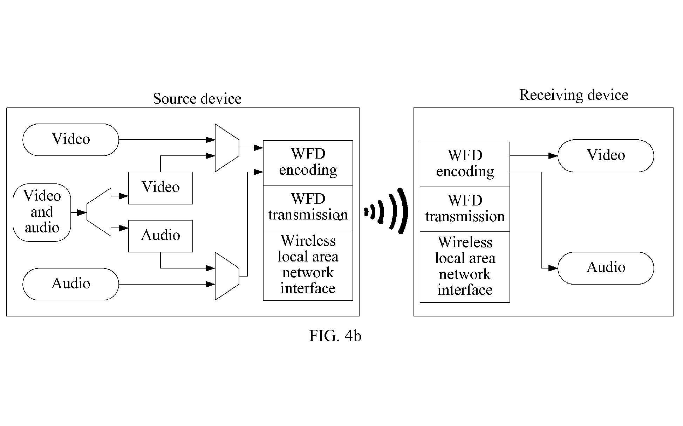

It should be noted that, a method for switching a playback device provided by an embodiment of the present invention may be used in a mobile terminal such as a smart phone, a tablet computer, or a portable computer. The mobile terminal, at least one first playback device located in a first space, and at least one second playback device located in a second space form a wireless local area network. Optionally, the wireless network may further include at least one of a wireless access point (the English full name: Access Point, AP for short) and a server. Each device in the wireless local area network may communicate with the mobile terminal by using a wireless signal. In this embodiment, the wireless local area network may cover an indoor space with many rooms such as an apartment, an office building, or a hotel, and the playback devices may be disposed at different locations. For example, as shown in FIG. 1a, a playback device may be disposed in each room of an apartment, and for another example, as shown in FIG. 1b, 4 playback devices may also be disposed in a lobby of a hotel, that is, a playback device is disposed at each corner of the lobby, and a playback device is disposed in each private room of the hotel. Because each device in the wireless local area network may communicate with the mobile terminal by using a wireless signal, a playback device and the mobile terminal in the wireless local area network form a playback system by using the wireless local area network. In this embodiment, an application used to control a playback device may be installed on the mobile terminal, or a control module that functions as a central controller may be integrated on the mobile terminal. It should be noted that, in schematic diagrams provided by the embodiments of the present invention, a possible manner of disposing a playback device in a room is mainly given as an example.

In this embodiment, the playback device may be a digital media player (the English full name: Digital Media Renderer, DMR for short) in a Digital Living Network Alliance (the English full name: Digital Living Network Alliance, DLNA for short) playback system. The mobile terminal may serve as a digital media controller (the English full name: Digital Media Controller, DMC for short) in the playback system, to control playback devices at different locations to enter an enabled, turned-off, or sleep state. The mobile terminal may both serve as a digital media server in the playback system and serve as a digital media server (the English full name: Digital Media Server, DMS for short) in the playback system. For example, multimedia content may be stored in a memory of the mobile terminal, and the multimedia content is sent to the playback device after a request sent by the playback device is received, where the multimedia content may include: text content, audio content, or video content. When needing to play multimedia content, the mobile terminal may also acquire to-be-played multimedia content from the Internet, and send the to-be-played multimedia content to the playback device by using the wireless local area network. Moreover, when needing to play multimedia content, the mobile terminal may also acquire to-be-played multimedia content from a storage device by using the wireless local area network, and then send the to-be-played multimedia content to the playback device by using the wireless local area network. For example, the mobile terminal may acquire multimedia content from another mobile terminal in a local area network, and send the acquired multimedia content to the playback device. Alternatively, the mobile terminal may send control signaling to the playback device, and trigger the playback device to acquire multimedia content from another mobile terminal in a local area network.

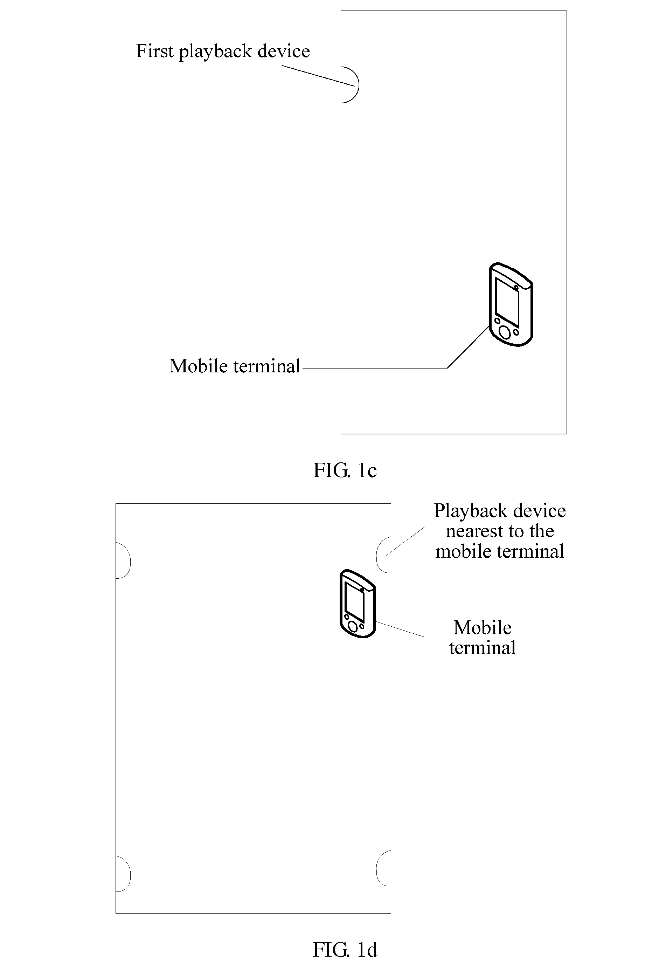

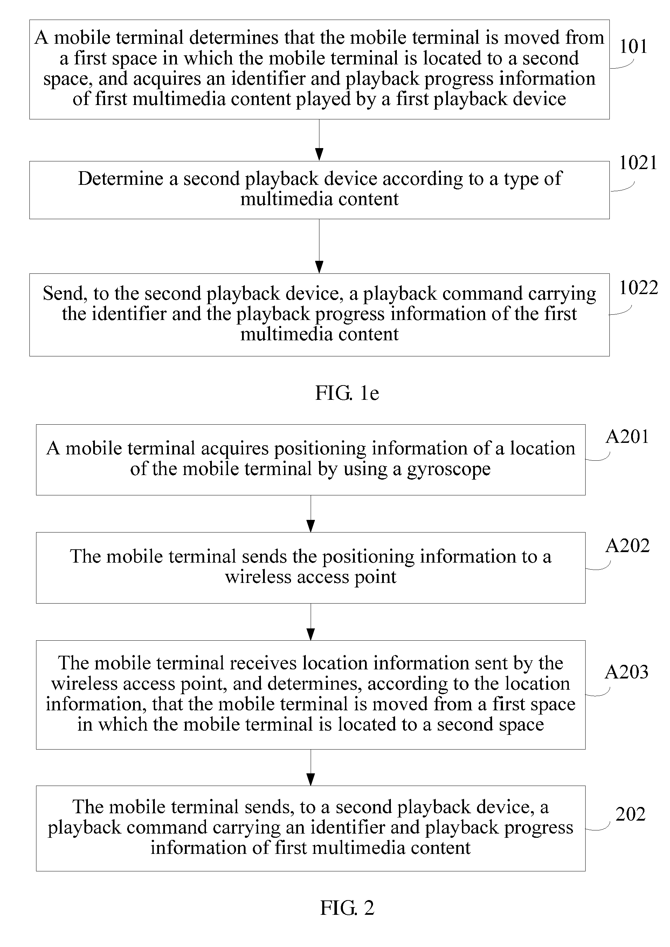

As shown in FIG. 1, an embodiment of the present invention provides a method for switching a playback device, used in a mobile terminal, where the mobile terminal, at least one first playback device located in a first space, and at least one second playback device located in a second space form a wireless local area network, and the method includes:
101: The mobile terminal determines that the mobile terminal is moved from the first space in which the mobile terminal is located to the second space, and acquires an identifier and playback progress information of first multimedia content played by the first playback device.

The playback progress information is used to indicate a time point, at which the first multimedia content played by the first playback device reaches, when the mobile terminal determines that the mobile terminal is moved from the first space in which the mobile terminal is located to the second space. For example, if the time point at which the first multimedia content played by the first playback device reaches is 00:02:16 when the mobile terminal determines that the mobile terminal is moved from the first space in which the mobile terminal is located to the second space, the playback progress information is 00:02:16 seconds.

It should be noted that, the acquiring, by the mobile terminal, an identifier and playback progress information of first multimedia content played by the first playback device includes:
acquiring, by the mobile terminal from a server or another mobile terminal, the identifier and the playback progress information of the first multimedia content played by the first playback device; or,
acquiring, by the mobile terminal from the mobile terminal or by using an Internet resource, the identifier and the playback progress information of the first multimedia content played by the first playback device.

In this embodiment, the mobile terminal may determine a location of the mobile terminal during a moving process by using a wireless access point in the wireless local area network, thereby determining that the mobile terminal is moved from the first space in which the mobile terminal is located to the second space.

For example, in an actual application, because many indoor environments have large areas, many rooms, two-layer and multi-layer building structures, or thick walls, it is unfavorable for propagating a wireless signal. Therefore, multiple wireless access points are usually disposed in many indoor environments. In this embodiment, the mobile terminal may use each wireless access point as a reference coordinate point, and determine a spatial location by using multiple reference coordinate points. For example, the mobile terminal may send, to the multiple wireless access points, a wireless signal carrying a pilot signal frame, and each wireless access point may obtain through analysis a transmission distance and angle information of the wireless signal after receiving the wireless signal sent by the mobile terminal, and then send the information obtained through analysis by the multiple wireless access points to a wireless access point for parsing or directly send the information to the mobile terminal for parsing. The wireless access point or the mobile terminal may obtain through parsing current location information of the mobile terminal by using a three-dimensional reconstruction technology, thereby determining a current location of the mobile terminal or a room in which the mobile terminal is currently located. If the wireless access point obtains through parsing the current location information of the mobile terminal, the wireless access point may send the location information obtained through parsing to the mobile terminal by using the wireless local area network.

For another example, the mobile terminal may extract location information from attribute information of playback devices located in different rooms, and determine locations of the playback devices according to the location information. For example, location information of a playback device may be configured in a friendly name (Friendly Name) of the playback device, for example, if a friendly name of a wireless speaker 1 located in an entertainment room is "speaker in entertainment room" or "Speaker in Entertainment Room", the mobile terminal may extract an entry such as "entertainment room" or "Entertainment Room" from the friendly name of the wireless speaker, thereby determining that the wireless speaker 1 is located in the entertainment room. For another example, a device description file of a playback device may include a field that describes a location of the playback device or a room in which the playback device is located, for example, content of a field <CurrentLocation> in a device description file of a display screen located in an entertainment room is "<CurrentLocation>Entertainment Room</CurrentLocation>", and the mobile terminal may analyze a field <CurrentLocation> in the device description file of the playback device, to obtain characters "Entertainment Room" in the field, and may use the characters "Entertainment Room" as location information of the playback device, thereby determining that the playback device is in the entertainment room.
102: The mobile terminal sends, to the second playback device, a playback command carrying the identifier and the playback progress information of the first multimedia content.

The playback command is used to trigger the second playback device to play the first multimedia content from a start point that is determined according to the playback progress information.

In this embodiment, the first space and the second space may be different, and the first playback device and the second playback device may be different. In this embodiment, the first space may be a location of the mobile terminal at a current moment, the second space may be a location to which the mobile terminal is moved after the mobile terminal is displaced, for example, the location of the mobile terminal may be a room in which the mobile terminal is located, and if the mobile terminal is in a living room currently, the living room is the first space, and if a user holds the mobile terminal and walks into a bedroom, the bedroom is the second space. Further, as shown in FIG. 1c, each room has only one playback device, a playback device at the location of the mobile terminal may be a playback device in the room in which the mobile terminal is located; or as shown in FIG. 1d, the room in which the mobile terminal is located has multiple playback devices, and a playback device at the location of the mobile terminal may be a playback device nearest to the mobile terminal in the room. For example, the first playback device may be a playback device 1, and after the mobile terminal is displaced, the second playback device may be a playback device 2; and playback devices at the location of the mobile terminal may also be all playback devices in the room in which the mobile terminal is located. For another example, if a cloakroom is the first space, the first playback device may be a playback device a; then, if a user holds the mobile terminal and walks into a living room, the living room is the second space, and if 4 playback devices are disposed in the living room, the second playback device may be a playback device b, a playback device c, a playback device d, and a playback device e.

The mobile terminal sends, to the second playback device, the playback command carrying the identifier and the playback progress information of the first multimedia content, where the playback command triggers the second playback device to determine the start point and then play the multimedia content from the start point. For example, as shown in FIG. 1a, if the first space in which the mobile terminal is located is a living room, the first playback device is a playback device 1 in the living room, and if the second space in which the mobile terminal is located is a bedroom, the second playback device is a playback device 2 in the bedroom, and what the playback device 1 is playing is a song A whose duration is 5 minutes. A user carries the mobile terminal and walks from the living room to the bedroom, and the mobile terminal starts a timer at the same time when the mobile terminal notifies the playback device 1 of starting playing the song A, and records a playback progress of the song A by using the timer. When the user carries the mobile terminal and walks from the living room to the bedroom, the timer displays that the song A has been played for 00:01:20, the mobile terminal may use time information of the timer of the mobile terminal as the playback progress information, and send, to the playback device 2, a playback command carrying the playback progress information and an identifier of the song A.

According to the method for switching a playback device provided by this embodiment of the present invention, a mobile terminal can automatically switch a playback device during a displacement process, which prevents the playback device from being switched by means of manual operation, so that the playback device is switched automatically instead of manually, thereby improving a speed of switching the playback device, and also saving time for a user. Further, multimedia content played by a playback device after the switching can also follow multimedia content played by the playback device before the switching.

Optionally, in this embodiment, at least two playback devices may be disposed in the second space, where a type of multimedia content that can be played by one playback device is not the same as a type of multimedia content that can be played by another playback device, and the mobile terminal needs to select one playback device from the at least two playback devices as the second playback device. A type of multimedia content at least includes an encoding format, the number of frames, or a bit rate, where the encoding format includes but is not limited to mp3, mp4, AVI, and the like; and the number of frames includes but is not limited to 720P, 1080P, and the like. Types of multimedia content that can be played by different playback devices may be different, for example, the playback device 1 in the second space is a speaker, and can only play audio content in an mp3 format, and the playback device 2 in the second space is a projection device, and can play audio and video content below 1080P. Therefore, 102 may be specifically implemented as a solution shown in FIG. 1e, which includes:
1021: The mobile terminal determines the second playback device according to a type of the multimedia content.

At least two playback devices are disposed in the second space. Because there may be many types of multimedia content, it is usually difficult for a playback device to normally play all types of multimedia content. Therefore, the mobile terminal may determine, according to a type of multimedia content, a playback device that can play the multimedia content. For example, the mobile terminal may acquire, from an SSDP packet, information such as a universally unique identifier (the English full name: Universally Unique Identifier, UUID for short), an IP address, and a device type of the playback device by using a technology based on the Simple Service Discovery Protocol (the English full name: Simple Service Discovery Protocol, SSDP for short), for example, the SSDP packet may be shown as follows:
NOTIFY * HTTP/1.1
HOST:239.255.255.250:1900
EXT:
   CACHE-CONTROL: max-age=1810
   LOCATION: http://10.11.85.185:9500/DeviceDescription.xml
   NT: urn:schemas-upnp-org:device:MediaRenderer:1
   NTS: ssdp:alive
   SERVER: Windows NT/5.0, UPnP/1.0, Huawei UPnP SDK/1.0
   USN: uuid:d1578360-feb3-1167-1000-2c27d742936c::urn:schemas-upnp-org:device:MediaRenderer:1

The mobile terminal may acquire, from the SSDP packet by using a GetProtrocolInfo() command, media format information supported by the playback device, for example, media format information that is supported by a playback device and may be acquired by the mobile terminal by using a universal plug and play (the English full name: Universal Plug and Play, UPnP for short) GetProtrocolInfo() action command is as follows:
<SinkProtocolInfo>
http-get:*:image/jpeg:DLNA.ORG_PN=JPEG_SM,
http-get:*:image/jpeg:DLNA.ORG_PN=JPEG_SM_ICO,
http-get:*:image/jpeg:DLNA.ORG_PN=JPEG_LRG_ICO,
http-get:*:image/png:DLNA.ORG_PN=PNG_SM_ICO,
http-get:*:image/png:DLNA.ORG_PN=PNG_LRG,
http-get:*:audio/mpeg:DLNA.ORG_PN=MP3,
http-get:*:audio/mpeg:DLNA.ORG_PN=MP3X,
http-get:*:audio/mp4:DLNA.ORG_PN=AAC_ISO,
httpget:*:audio/3gpp:DLNA.ORG_PN=AAC_ISO
</SinkProtocolInfo>

Therefore, the mobile terminal may determine that the playback device is a Media Renderer, and a media format that can be played is a media format such as jpeg, mp3, or mp4, and if the type of the multimedia content is mp3, the mobile terminal may determine the playback device as the second playback device.

The mobile terminal may also acquire preset name information of each playback device, or an iconic character of the playback device. For example, a friendly name of the playback device is "television in living room" or "television A". The mobile terminal determines, according to the friendly name or the iconic character of the playback device, a specific type of multimedia content that can be played by the playback device, for example, a playback device with a friendly name having "television" may be used as a playback device that can play all video content.
1022: The mobile terminal sends, to the second playback device, the playback command carrying the identifier and the playback progress information of the first multimedia content.

Further, an embodiment of the present invention further provides a method for switching a playback device, including:
201: A mobile terminal determines that the mobile terminal is moved from the first space in which the mobile terminal is located to the second space, and acquires an identifier and playback progress information of first multimedia content played by the first playback device.

In this embodiment, a case in which the first playback device does not play multimedia content also exists. For example, at an initial moment, if the mobile terminal determines that a current location is the first space, and the first playback device is not started, the mobile terminal may determine to-be-played multimedia content from a memory or a server of the mobile terminal or the Internet. For example, in an apartment suite formed by 4 rooms, each room has a playback device, and at the initial moment, if the mobile terminal is in a room 1, and none of the playback devices in the rooms is playing multimedia content, the mobile terminal may determine a song as the to-be-played multimedia content.

The mobile terminal may send an invoking command, for example, a CDS::Browse() command or a CDS::Search() command, to a device that serves as a DMS. After receiving the invoking command sent by the mobile terminal, the device that serves as the DMS may acquire directory information of the multimedia content from a memory of the device that serves as the DMS or from the Internet, and send the directory information of the multimedia content to the mobile terminal by using a wireless local area network, where the directory information includes information such as file names of at least two pieces of multimedia content, a uniform resource locator (the English full name: Uniform Resource Locator, URL for short), a media compression encoding format, playback duration, an audio author, and a copyright. After receiving the directory information, the mobile terminal may determine to-be-played multimedia content according to a preset screening rule.

After the first playback device is started, the first playback device may be notified of the to-be-played multimedia content, so that the first playback device starts playing the to-be-played multimedia content. For example, the mobile terminal may send an AVT::SetAVTransportURI() command to the first playback device by using the wireless local area network, and send a URL of the to-be-played multimedia content and corresponding metadata to the first playback device; then the mobile terminal sends an AVT::Play() command to the first playback device, to trigger the first playback device to request, according to the URL of the to-be-played multimedia content, the device that serves as the DMS to acquire the to-be-played multimedia content, and the device that serves as the DMS sends the to-be-played multimedia content to the first playback device, so that the to-be-played multimedia content can start to be played on the first playback device. In this case, values of variable parameters InstanceID in the AVT::SetAVTransportRUI() command and the AVT::Play() command are both 0.

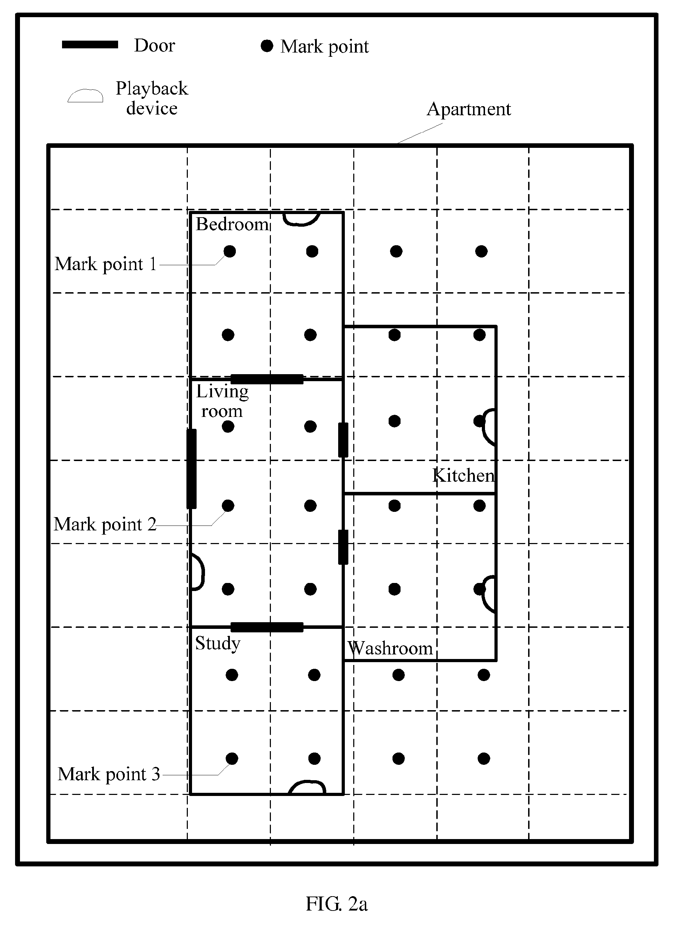

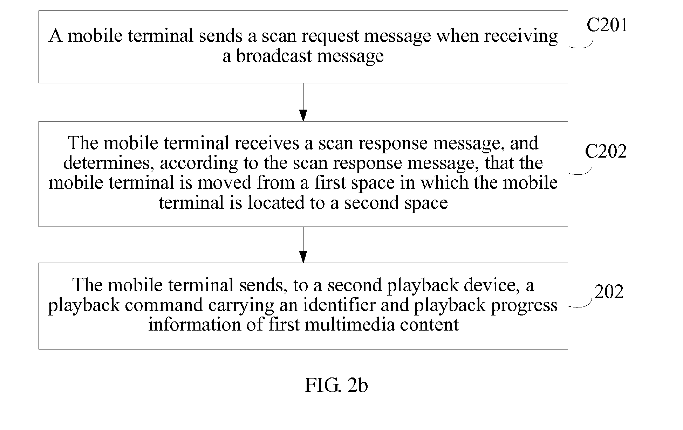

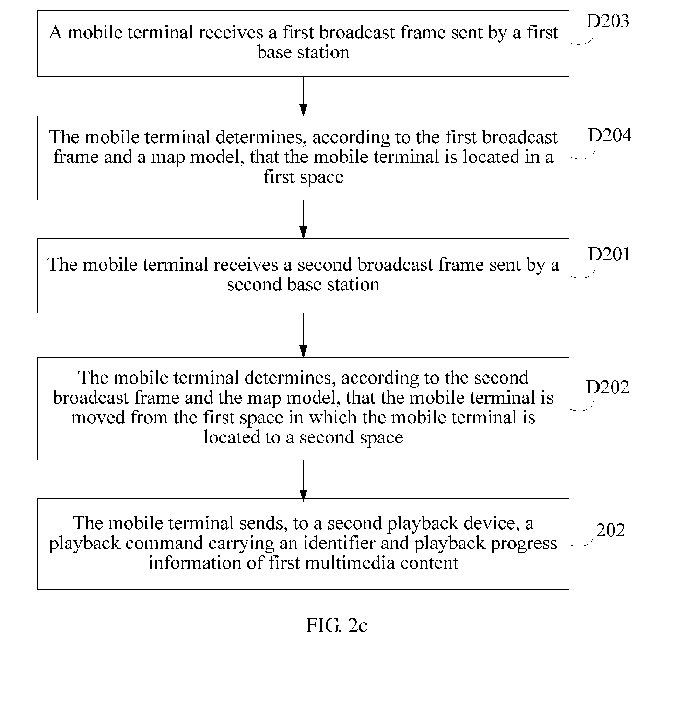

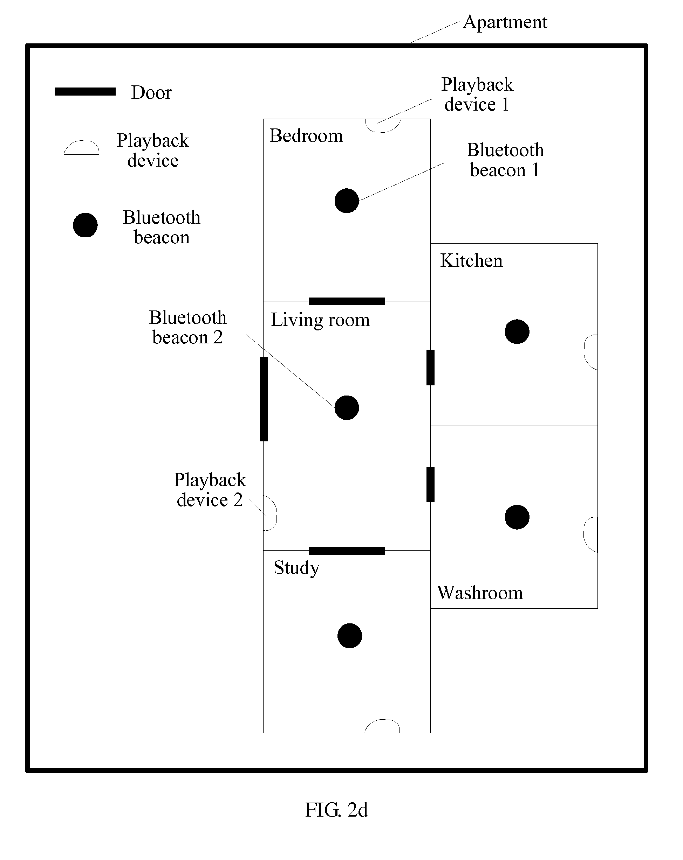

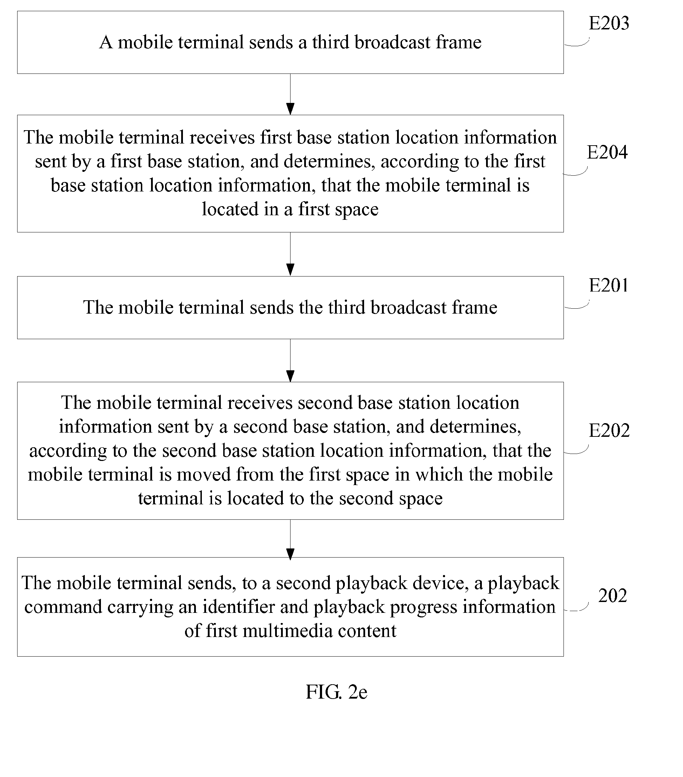

In an actual application, the mobile terminal may determine a location of the mobile terminal by using multiple wireless access points and by using an existing three-dimensional reconstruction technology. For a home wireless local area network, or another wireless local area network of a smaller scale, usually, only one wireless access point is set to reduce a construction cost. In this case, because there is only one wireless access point used as a reference coordinate point, it is difficult to determine the location of the mobile terminal by using multiple wireless access points and by using the existing three-dimensional reconstruction technology. However, a gyroscope is built in current mobile terminals. The mobile terminal may determine the location of the mobile terminal by using a gyroscope of the mobile terminal and the wireless access point in the wireless local area network. Therefore, in a case in which a wireless local area network includes at least one wireless access point, this embodiment further provides a method for determining a movement of a mobile terminal, where as shown in FIG. 2, 201 may include A201, A202 and A203, which are specifically as follows:
A201: The mobile terminal acquires positioning information of a location of the mobile terminal by using a gyroscope.

The wireless local area network further includes at least one wireless access point. The positioning information includes three-dimensional coordinates of the mobile terminal.

The mobile terminal may determine three-dimensional coordinates of the current location of the mobile terminal by using the gyroscope.
A202: The mobile terminal sends the positioning information to the wireless access point.
A203: The mobile terminal receives location information sent by the wireless access point, and determines, according to the location information, that the mobile terminal is moved from the first space in which the mobile terminal is located to the second space.

The location information is determined by the wireless access point according to the positioning information sent by the mobile terminal.

In this embodiment, the mobile terminal may send the positioning information of the mobile terminal to the wireless access point in the wireless local area network. The wireless access point may pre-store data of a mark point within a preset spatial range, for example, as shown in FIG. 2a, each room in an apartment may be divided into multiple grid areas, each grid area has a mark point, and data of the mark point of each grid area may include information such as a room in which the grid area is located and three-dimensional coordinates. For example, in data of a mark point 1, three-dimensional coordinates are: (x1, y1, 0); in data of a mark point 2, three-dimensional coordinates are: (x2, y2, 0); and in data of a mark point 3, three-dimensional coordinates are: (x3, y3, 0). After acquiring, by using the gyroscope, the three-dimensional coordinates of the location in which the mobile terminal is located and generates positioning information, the mobile terminal sends the positioning information to the wireless access point, and the wireless access point may compare the three-dimensional coordinates (x, y, 0) in the positioning information with the data of each mark point, and determine data of a mark point nearest to the three-dimensional coordinates in the positioning information of the mobile terminal, for example, the wireless access point may calculate Li by using that Li = (x-xi)2 + (y-yi)2, where i=1, 2, 3. A mark point with a minimum Li value is used as the nearest mark point. Therefore, a grid area in which the mobile terminal is located is determined, so that a room in which the mobile terminal is located or a specific location of the mobile terminal in the room is determined.

The wireless access point may use data of the determined mark point as the location information, and send the location information to the mobile terminal. Because the data of the mark point that is used as the location information includes information such as a room in which the grid area is located and three-dimensional coordinates, the mobile terminal can determine, according to the location information, the room in which the mobile terminal is located, or the location of the mobile terminal in the room. Therefore, the mobile terminal can determine the first space or the second space according to the location information sent by the wireless access point.

According to A201 to A203, the mobile terminal can perform positioning in a case in which the wireless local area network has only one wireless access point, and if the wireless local area network has multiple wireless access points, one of the multiple wireless access points may be selected and A201 to A203 are performed for positioning.

Optionally, in this embodiment, indoor positioning may also be performed by using a function or a component of the mobile terminal. 201 may include B201, B202, and B203, which are specifically as follows:
First,
   B201: The mobile terminal acquires displacement information in a specified time period by using a gyroscope, and acquires a map model according to the displacement information.

The map model is used to indicate topographic data of an indoor space in which the mobile terminal is located.

The map model is used to indicate the topographic data of the indoor space in which the mobile terminal is located. In an actual application, a user usually holds the mobile terminal and walks around indoors. Therefore, the mobile terminal may continuously record displacement information in a time period by using the gyroscope, and obtain through analysis the map model according to the continuously recorded displacement information. After obtaining the map model, the mobile terminal may continue to record the displacement information, and calibrate and correct the map model according to latest displacement information. For example, after the mobile terminal generates the map model, the mobile terminal may periodically record three-dimensional coordinates of a location of the mobile terminal, and update a contour of the map model according to the three-dimensional coordinates of the location of the mobile terminal. The mobile terminal may record a location regularly marked by the user, thereby identifying information such as a name and a size of a room. Specifically, the topographic data may include contour information of the room, location information of the room, and entrance and exit information of the room.
B202: The mobile terminal acquires positioning information of the location of the mobile terminal by using the gyroscope.

The positioning information includes three-dimensional coordinates of the mobile terminal.
B203: The mobile terminal determines, according to the positioning information and the map model, that the mobile terminal is moved from the first space in which the mobile terminal is located to the second space.

When needing to perform positioning, the mobile terminal may acquire current positioning information, for example, determine, on the map model, a current coordinate location of the mobile terminal by using three-dimensional coordinate information and velocity vector information that are collected by using the gyroscope. Because a current mobile terminal usually has a positioning device with high precision such as a gyroscope and can run an application for indoor positioning, performing indoor positioning by using a function of the mobile terminal can reduce a cost required for adding a wireless access point used in positioning.

Optionally, in this embodiment, indoor positioning may also be performed by using Bluetooth functions of the mobile terminal and the playback device. As shown in FIG. 2b, 201 may include C201 and C202, which are specifically as follows:
C201: The mobile terminal sends a scan request message when receiving a broadcast message.

The first playback device is located in the first space, a second playback device is located in the second space, both the first playback device and the second playback device have a Bluetooth module, the first playback device and the second playback device broadcast a broadcast message outwards by using the Bluetooth module each, and when receiving the broadcast message, the mobile terminal sends a scan request message outwards by using the Bluetooth module of the mobile terminal.
C202: The mobile terminal receives a scan response message, and determines, according to the scan response message, that the mobile terminal is moved from the first space in which the mobile terminal is located to the second space.

If the second playback device receives the scan request information and sends the scan response message to the mobile terminal according to the scan request information, the mobile terminal receives the scan response message sent by the second playback device, which indicates that the location of the mobile terminal is near to the second playback device, thereby determining that the mobile terminal is currently located in the second space, that is, the mobile terminal is moved from the first space in which the mobile terminal is located to the second space.

It should be noted that, the Bluetooth is a short distance wireless communication manner, an effective distance of communication usually does not exceed 10 meters, and a topology network structure of the Bluetooth is simple. Multiple spaces have multiple playback devices, the mobile terminal receives a broadcast message broadcast by one of the multiple playback devices, the mobile terminal sends scan request information to the playback device, and then the mobile terminal receives the scan response information sent by the playback device, which indicates that the mobile terminal is near to the playback device, thereby determining that the mobile terminal is located in a space in which the playback device is located, that is, the mobile terminal is positioned by using Bluetooth functions of the mobile terminal and the playback device. For example, as shown in FIG. 1a, if the first space in which the mobile terminal is located is a bedroom, the first playback device is a playback device 1 in the bedroom, and if the second space in which the mobile terminal is located is a living room, the second playback device is a playback device 2 in the living room. The mobile terminal, the playback device 1, and the playback device 2 have a Bluetooth module each, and the playback device 1 and the playback device 2 both enable the Bluetooth module and broadcast broadcast information outwards. When a mobile device is located in the bedroom, after receiving a broadcast message sent by the Bluetooth module of the playback device 1, a Bluetooth module of the mobile device sends a scan request message to the Bluetooth module of the playback device 1, and after receiving the scan request message, the Bluetooth module of the playback device 1 sends a scan response message to the Bluetooth module of the mobile device, so that the mobile device and the playback device 1 implement mutual discovery, that is, the mobile device is nearest to the playback device 1. Then, the mobile terminal is moved from the bedroom to the living room, and a Bluetooth link between the mobile terminal and the playback device 1 is disconnected because an effective distance of Bluetooth communication is limited, and the mobile terminal and the playback device 2 implement mutual discovery by using the foregoing method, that is, the mobile terminal is near to the playback device 2, thereby determining that the mobile terminal is moved from the bedroom to the living room, and positioning the mobile terminal.

The mobile terminal and the playback device do not transmit specific data, but only position the mobile terminal through Bluetooth scan and detection; therefore, power consumption is lower, and a positioning process is simpler and quicker.

Optionally, in this embodiment, at least two base stations may be further deployed indoors, and an indoor location of a base station is identified by using the map model, thereby performing indoor positioning. A first base station is located in the first space, and a second base station is located in the second space. The base station may be a Bluetooth beacon (Bluetooth Beacon) or another small base station that can be easily disposed indoors and uses a short distance wireless communications technology such as Wi-Fi, ZigBee, or Z-Wave. The following embodiments are mainly in a scenario in which two base stations are deployed indoors, and the Bluetooth beacon is used as a base station for description. However, it should be noted that, this embodiment of the present invention is not limited to the implementation manner of using the Bluetooth beacon in the scenario in which two base stations are deployed indoors.

First, 201 may include D201 and D202, and as shown in FIG. 2c, before D201, 201 may further include D203 and D204, which are specifically as follows:
D201: The mobile terminal receives a second broadcast frame sent by the second base station.

A second Bluetooth beacon is located in the second space. A Bluetooth beacon is a small base station that supports Bluetooth low energy (the English full name: Bluetooth Low Energy, the English acronym: BLE). The Bluetooth beacon has an effective range of about 10 meters, and can detect a mobile terminal near the Bluetooth beacon by means of proximity sensing. Multiple Bluetooth beacons deployed indoors periodically send a broadcast frame, and in this embodiment, the broadcast frame carries an identifier of the Bluetooth beacon. When entering an effective range of a Bluetooth beacon, the mobile terminal receives a broadcast frame sent by the Bluetooth beacon.
D202: The mobile terminal determines, according to the second broadcast frame and the map model, that the mobile terminal is moved from the first space in which the mobile terminal is located to the second space.

The map model is further used to indicate an indoor location of the Bluetooth beacon, and the map model may be stored in the mobile terminal, or may be stored in a positioning server on a network side. According to the identifier of the Bluetooth beacon carried in the broadcast frame, the mobile terminal determines a location of the mobile terminal by using an indoor location of the Bluetooth beacon in the map model, or uploads the identifier of the Bluetooth beacon to a positioning server in a wireless communication manner such as Wi-Fi (the English full name: Wireless Fidelity) or 3G (the English full name: 3rd-Generation), and the positioning server determines the location of the mobile terminal according to the indoor location of the Bluetooth beacon in the map model, thereby determining that the mobile terminal is moved from the first space to the second space.

It should be noted that, in this embodiment, one Bluetooth beacon may be disposed in the first space or multiple Bluetooth beacons may be disposed in the first space, and similarly, one Bluetooth beacon may be disposed in the second space or multiple Bluetooth beacons may be disposed in the second space. The map model records a relationship between a location and a space of the Bluetooth beacon.

As shown in FIG. 2d, if the first space in which the mobile terminal is located is a bedroom, the first playback device is a playback device 1 in the bedroom, a Bluetooth beacon 1 is located in the bedroom, and an effective range of the Bluetooth beacon 1 covers the bedroom; and if the second space in which the mobile terminal is located is a living room, the second playback device is a playback device 2 in the living room, a Bluetooth beacon 2 is located in the living room, and an effective range of the Bluetooth beacon 2 covers the living room. The mobile terminal supports a Bluetooth function, and the Bluetooth beacon 1 and the Bluetooth beacon 2 periodically send a broadcast frame separately. When the mobile terminal is moved from the bedroom to the living room, the mobile terminal enters the effective range of the Bluetooth beacon 2. The mobile terminal receives a broadcast frame sent by the Bluetooth beacon 2, where the broadcast frame carries an identifier of the Bluetooth beacon 2, and the mobile terminal performs matching according to the identifier of the Bluetooth beacon 2 and the Bluetooth beacon in the map model, to obtain a location of the Bluetooth beacon 2, thereby determining that the mobile terminal is moved from the bedroom to the living room.

Before D201, 201 may further include:
D203: The mobile terminal receives a first broadcast frame sent by the first base station.

The first broadcast frame carries an identifier of the first base station.
D204: The mobile terminal determines, according to the first broadcast frame and the map model, that the mobile terminal is located in the first space.

The map model records a relationship between a location and a space of a base station, and the mobile terminal may determine, according to the identifier of the first base station in the first broadcast frame and the map model, that the mobile terminal is located in the first space.

Second, 201 may include E201 and E202, and as shown in FIG. 2e, 201 may further include E203 and E204, which are specifically as follows:
E201: The mobile terminal sends a third broadcast frame.

A mobile device periodically broadcasts a broadcast frame (that is, the third broadcast frame) outwards, where the third broadcast frame carries an identifier of the mobile terminal and a Bluetooth address of the mobile terminal, and when the mobile terminal enters an effective range of a Bluetooth beacon, the Bluetooth beacon receives the third broadcast frame broadcast by the mobile terminal.
E202: The mobile terminal receives location information of the second base station sent by the second base station, and determines, according to the location information of the second base station, that the mobile terminal is moved from the first space in which the mobile terminal is located to the second space.

When the mobile terminal enters an effective range of a Bluetooth beacon, the Bluetooth beacon receives the third broadcast frame sent by the mobile terminal, and the Bluetooth beacon sends base station location information of the Bluetooth beacon to the mobile terminal according to the identifier and the Bluetooth address of the mobile terminal, and the mobile terminal receives the base station location information, and determines, according to the base station location information, that the mobile terminal is moved from the first space to the second space. For example, as shown in FIG. 2d, if the first space in which the mobile terminal is located is a bedroom, the first playback device is a playback device 1 in the bedroom, a Bluetooth beacon 1 is located in the bedroom, and an effective range of the Bluetooth beacon 1 covers the bedroom; and if the second space in which the mobile terminal is located is a living room, the second playback device is a playback device 2 in the living room, a Bluetooth beacon 2 is located in the living room, and an effective range of the Bluetooth beacon 2 covers the living room. The mobile terminal supports a Bluetooth function, and the mobile terminal periodically sends a broadcast frame carrying the identifier and the Bluetooth address of the mobile terminal. When the mobile terminal is moved from the bedroom to the living room, the mobile terminal leaves the effective range of the Bluetooth beacon 1 and enters the effective range of the Bluetooth beacon 2, and the Bluetooth beacon 2 receives the broadcast frame sent by the mobile terminal. The Bluetooth beacon 2 sends base station location information of the Bluetooth beacon 2 to the mobile terminal according to the identifier and the Bluetooth address of the mobile terminal, and the mobile terminal determines a location of the mobile terminal according to the received location information of the Bluetooth beacon 2, thereby determining that the mobile terminal is moved from the bedroom to the living room.

Before E201, 201 may further include:
E203: The mobile terminal sends the third broadcast frame.

The third broadcast frame carries an identifier and an address of the mobile terminal.
E204: The mobile terminal receives location information of the first base station sent by the first base station, and determines, according to the location information of the first base station, that the mobile terminal is located in the first space.

The location information of the first base station is sent by the first base station when the first base station receives the third broadcast frame.

The Bluetooth beacon supports Bluetooth low energy (the English full name: Bluetooth Low Energy, the English acronym: BLE), thereby further reducing power consumption in positioning the mobile terminal.

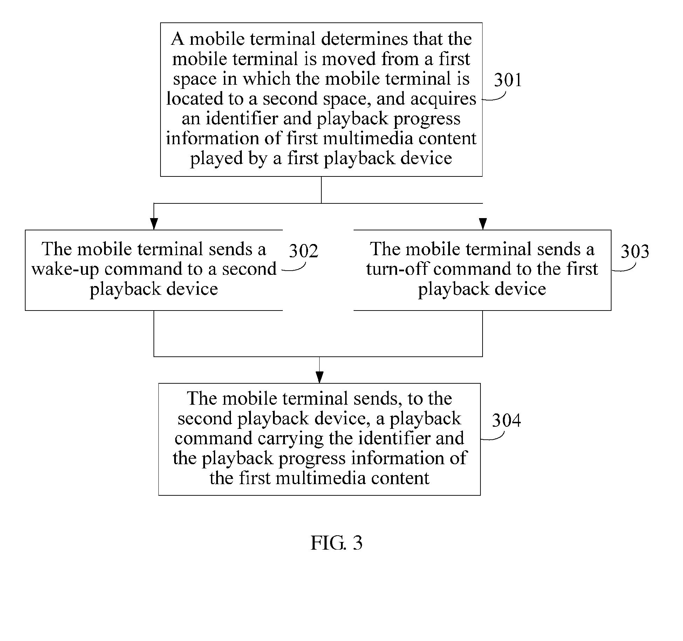

Optionally, as shown in FIG. 3, an embodiment of the present invention further provides a method for switching a playback device, used in a mobile terminal, where the mobile terminal, at least one first playback device located in a first space, and at least one second playback device located in a second space form a wireless local area network, and the method includes:
301: The mobile terminal determines that the mobile terminal is moved from the first space in which the mobile terminal is located to the second space, and acquires an identifier and playback progress information of first multimedia content played by the first playback device.
302: The mobile terminal sends a wake-up command to the second playback device.

The wake-up command is used to wake the second playback device up.

For example, the mobile terminal that serves as a digital media controller may send a ConfigurationManagementService::GetSupportedParameters() command to the second playback device, and after receiving the command sent by the mobile terminal, the second playback device may feed back, to the mobile terminal, information such as InterfaceType that indicates a network interface type, InterfaceStatus that indicates network interface status, and WakeOnPattern that indicates a wake-up method. For example, a value of the network interface type InterfaceType is "802.11", and a value of the network interface status InterfaceStatus is "doze". Therefore, when acquiring that a network interface state of the second playback device is "doze", the mobile terminal that serves as a digital media controller may wake the second playback device up by using the wake-up method WakeOnPattern corresponding to the network interface state "doze".
303: The mobile terminal sends a turn-off command to the first playback device.

The turn-off command is used to trigger the first playback device to turn down playback volume in a preset time period until the playback volume is zero. Optionally, the turn-off command is used to trigger the first playback device to stop playing the audio and video content in the preset time period.

It should be noted that, 302 and 303 may be performed simultaneously, or may be performed in a sequence (for example, 302 is performed before 303; or, 303 is performed before 302) before the mobile terminal sends, to the second playback device, a playback command carrying the identifier and the playback progress information of the first multimedia content.

Optionally, the mobile terminal may further send a sleep command to the first playback device, where the sleep command is used to trigger the first playback device to enter a sleep state.
304: The mobile terminal sends, to the second playback device, a playback command carrying the identifier and the playback progress information of the first multimedia content.

The playback command is used to trigger the second playback device to play the first multimedia content from a start point that is determined according to the playback progress information.

That the playback command is used to trigger the second playback device to play the first multimedia content from a start point that is determined according to the playback progress information includes:
the playback command is used to trigger the second playback device to determine that a second time point obtained by subtracting preset duration from a first time point after the first time point is acquired by the second playback device according to the playback progress information is the start point, and trigger the second playback device to play the first multimedia content from the start point.

For example, with reference to the solutions in FIG. 1, FIG. 2 and FIG. 3 in the embodiments of the present invention, an information exchange process shown in FIG. 4 may be obtained, where a DMC may be a mobile terminal, or a DMS may be the mobile terminal or another device in the wireless local area network, such as a set top box or a computer.
1. The mobile terminal receives an instruction entered by a user, sends an AVT::SetAVTransportURI() command and an AVT::Play() command to a playback device 1 placed in an entertainment room, and sends a URL of to-be-played multimedia content and metadata of the multimedia content to the playback device 1. In this case, values of variable parameters InstanceID in the AVT::SetAVTransportRUI() command and the AVT::Play() command are both 0.
2. The playback device 1 acquires the multimedia content from the DMS according to the URL of the multimedia content.
3. Play the multimedia content on the playback device 1.
4. When the user carries the mobile terminal and walks from the entertainment room to a bedroom 1, the mobile terminal sends positioning information to a wireless access point (AP) in real time.
5. The wireless access point calculates, according to the received positioning information, that a current location of the user changes from the entertainment room to the bedroom 1, and sends current location information of the mobile terminal to the mobile terminal.
6. The mobile terminal sends an AVT::Stop() command to the playback device 1.
7. The mobile terminal determines a specific type of the multimedia content played by the playback device 1, and further determines that a playback device 2 can play the multimedia content played by the playback device 1.
8. The mobile terminal sends a CMS::PrepareforConnection() command, an AVT::SetAVTransportURI() command, and an AVT::Play() command to the playback device 2, and continues to play, on the playback device 2, the multimedia content played by the playback device 1. Values of variable parameters InstanceID in the CMS::PrepareforConnection() command, the AVT::SetAVTransportURI() command, and the AVT::Play() command are all 1.

According to the method for switching a playback device provided by this embodiment of the present invention, a mobile terminal can automatically switch a playback device during a displacement process, which prevents the playback device from being switched by means of manual operation, so that the playback device is switched automatically instead of manually, thereby improving a speed of switching the playback device, and also saving time for a user. Further, after the mobile terminal is displaced, a playback device at an original location may be enabled to enter a sleep state, thereby reducing energy consumption of the playback device in a playback system. Further, multimedia content played by a playback device after the switching can also follow multimedia content played by the playback device before the switching.

An embodiment of the present invention further provides a method for switching a playback device, used in a mobile terminal, where the mobile terminal, at least one first playback device located in a first space, and at least one second playback device located in a second space form a wireless local area network, and as shown in FIG. 4a, the method includes:
401: The mobile terminal generates multimedia playback data.

The multimedia playback data is multimedia content currently played by the mobile terminal. The mobile terminal can read, by using a wireless fidelity display (Wi-Fi display in English) technology, screen display data in a video RAM of the current mobile terminal, and perform H.264 encoding on the screen display data to form a code stream, thereby generating the multimedia playback data.
402: The mobile terminal determines that the mobile terminal is located in the first space, and sends the multimedia playback data to the first playback device, so that the first playback device plays multimedia content currently played by the mobile terminal.

The mobile terminal determines that the mobile terminal is located in the first space, and the first playback device is located in the first space. The mobile terminal sends the multimedia playback data to the first playback device, so that the first playback device and the mobile terminal implement synchronous playback. After receiving the multimedia playback data, the first playback device restores the multimedia playback data to original data by using an H.264 decoder, and enables images on screens of the mobile terminal and the first playback device to be displayed synchronously by using a synchronization mechanism between the mobile terminal and the first playback device.

It should be noted that, a source device (Source) and a receiving device (Sink) exist in the Wi-Fi display technology, and the source device and the receiving device may be connected by using wireless fidelity direct (Wi-Fi Direct in English, the English acronym: WFD). In this embodiment, the mobile terminal serves as a source device, the first playback device or the second playback device serves as a receiving device, and multimedia content, such as movies, music, and pictures, stored in the mobile terminal may be pushed to the first playback device or the second playback device by using the Wi-Fi display technology, so that the first playback device or the second playback device implements synchronous playback with the mobile terminal. As shown in FIG. 4b, a system architecture of the Wi-Fi display technology includes a source device and a receiving device. The source device encodes a currently played video and/or currently played audio by using wireless fidelity direct (Wi-Fi Direct in English, the English acronym: WFD), to form a code stream, and sends the code stream to the receiving device by using a wireless fidelity interface (Wi-Fi interface in English), and the receiving device performs wireless fidelity direct (Wi-Fi Direct in English, the English acronym: WFD) decoding on the code stream, so that the source device and the receiving device implement synchronous playback.
403: The mobile terminal determines that the mobile terminal is moved from the first space in which the mobile terminal is located to the second space, and sends the multimedia playback data to the second playback device, so that the second playback device plays the multimedia content currently played by the mobile terminal.

When the mobile terminal is moved from the first space to the second space, that is, when the mobile terminal is currently located in the second space, the mobile terminal sends the multimedia playback data to the second playback device, so that the second playback device and the mobile terminal implement synchronous playback.

For example, as shown in FIG. 1a, multimedia content, such as movies, music, and pictures, is stored in a mobile phone, a living room has a playback device 1, a bedroom has a playback device 2, and the smart phone is located in the bedroom. The smart phone plays a stored movie, and pushes, by using the Wi-Fi display technology, the movie to the playback device 1 for synchronous playback, and then the smart phone is moved from the bedroom to the living room. An indoor positioning client in the smart phone can report location coordinate information of the mobile phone to a wireless access point (AP) in real time. The AP detects that a location of the mobile phone changes from the bedroom to the living room, and sends current location information to the smart phone. When detecting that a current location changes from the bedroom to the living room, the smart phone automatically disconnects a data link to the playback device 1 in the bedroom, and the movie played on the smart phone automatically pauses and a Wi-Fi direct connection is established to the playback device 2 in the living room. If the connection is established successfully, the movie played on the mobile phone continues to be played, and is pushed, by using the Wi-Fi display technology, to the playback device 2 in the living room for synchronous playback.

According to the method for switching a playback device provided by this embodiment of the present invention, a mobile terminal can automatically switch a playback device during a displacement process, which prevents the playback device from being switched by means of manual operation, so that the playback device is switched automatically instead of manually, thereby improving a speed of switching the playback device, and also saving time for a user. The mobile terminal may also serve as a source device, so that a playback device in a space in which the mobile terminal is located and the mobile terminal play multimedia content synchronously.

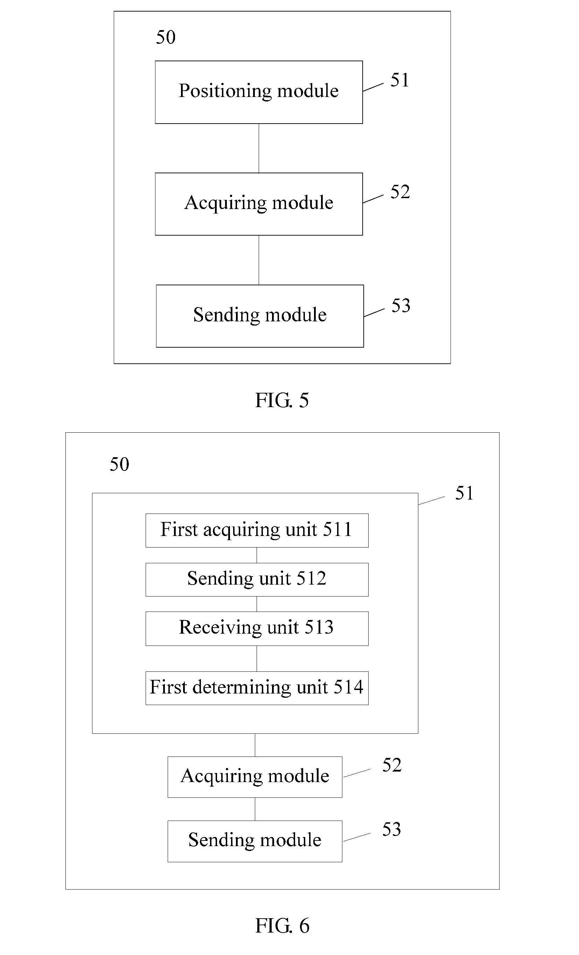

An embodiment of the present invention further provides a mobile terminal 50, where the mobile terminal 50, at least one first playback device located in a first space, and at least one second playback device located in a second space form a wireless local area network, and as shown in FIG. 5, the mobile terminal includes:
a positioning module 51, configured to determine a location of the mobile terminal;
an acquiring module 52, configured to determine, by using the positioning module 51, that the mobile terminal is moved from the first space in which the mobile terminal is located to the second space, and acquire an identifier and playback progress information of first multimedia content played by the first playback device; and
a sending module 53, configured to send, to the second playback device, a playback command carrying the identifier and the playback progress information of the first multimedia content, where the playback command is used to trigger the second playback device to play the first multimedia content from a start point that is determined according to the playback progress information.

Optionally, the wireless local area network further includes at least one wireless access point, and as shown in FIG. 6,
the positioning module 51 may include:
   a first acquiring unit 511, configured to acquire positioning information of the location of the mobile terminal by using a gyroscope, where the positioning information includes three-dimensional coordinates of the mobile terminal;
   a sending unit 512, configured to send the positioning information acquired by the first acquiring unit 511 to the wireless access point;
   a receiving unit 513, configured to receive location information sent by the wireless access point, where the location information is determined by the wireless access point according to the positioning information sent by the mobile terminal; and
   a first determining unit 514, configured to determine the location of the mobile terminal according to the location information received by the receiving unit 513.

Optionally, the sending unit 512 is further configured to: before sending, to the second playback device, the playback command carrying the identifier and the playback progress information of the first multimedia content, send a wake-up command to the second playback device, where the wake-up command is used to wake the second playback device up.

Further, the sending unit 512 is further configured to: before sending, to the second playback device, the playback command carrying the identifier and the playback progress information of the first multimedia content, send a turn-off command to the first playback device, where the turn-off command is used to trigger the first playback device to turn down playback volume in a preset time period until the playback volume is zero.

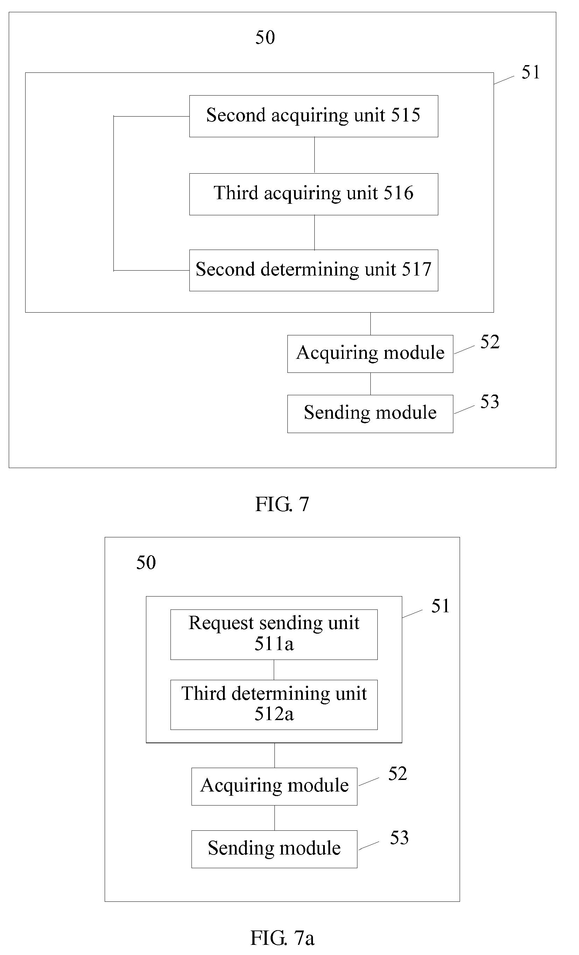

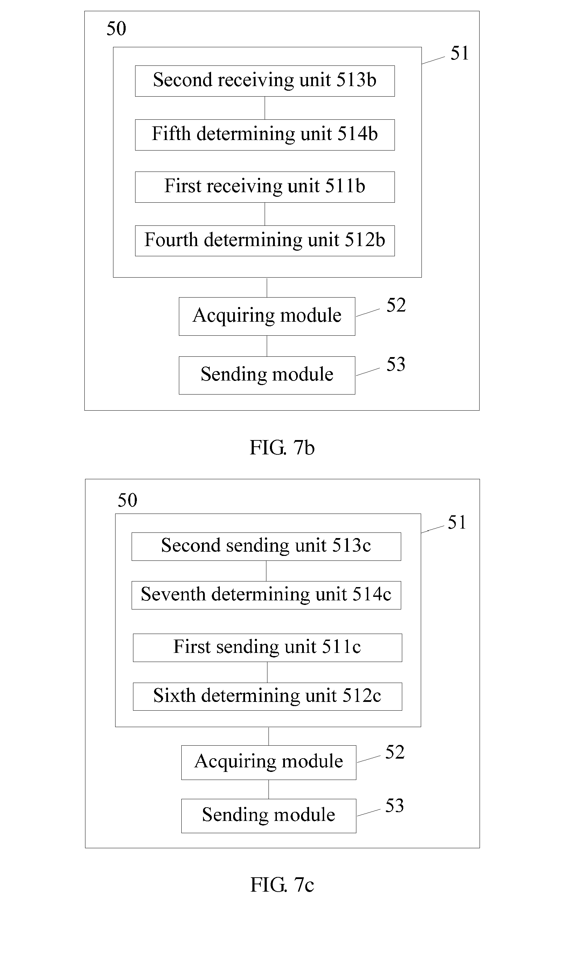

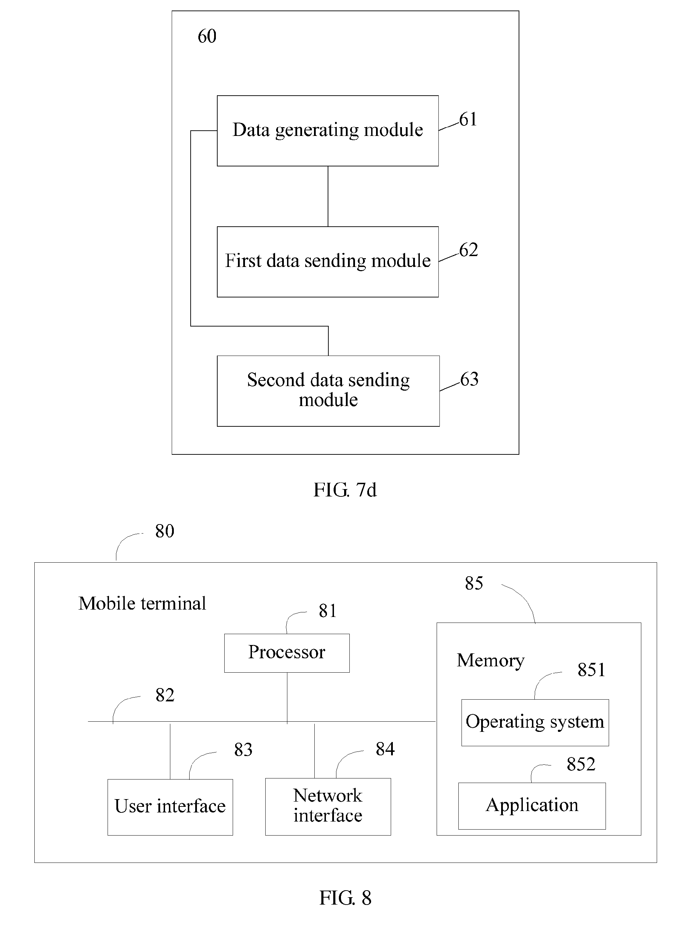

Optionally, as shown in FIG. 7, the positioning module 51 may further include:
a second acquiring unit 515, configured to acquire displacement information in a specified time period by using a gyroscope, and acquire a map model according to the displacement information, where the map model is used to indicate topographic data of an indoor space in which the mobile terminal is located;
a third acquiring unit 516, configured to acquire positioning information of the location of the mobile terminal by using the gyroscope, where the positioning information includes three-dimensional coordinates of the mobile terminal; and
a second determining unit 517, configured to determine the location of the mobile terminal according to the map model acquired by the second acquiring unit 515 and the positioning information acquired by the third acquiring unit 516.

Optionally, as shown in FIG. 7a, the positioning module 51 may further include:
a request sending unit 511a, configured to send a scan request message when a broadcast message is received, where
the broadcast information is broadcast by the second playback device; and
a third determining unit 512a, configured to receive a scan response message, and determine, according to the scan response message, that the mobile terminal is moved from the first space in which the mobile terminal is located to the second space, where
the scan response message is generated and sent by the second playback device according to the scan request message.

Optionally, at least two base stations further exist in the first space and the second space, and the map model is further used to indicate an indoor location of a base station. As shown in FIG. 7b, the positioning module 51 may further include:
a first receiving unit 511b, configured to receive a second broadcast frame sent by the second base station, where
the second broadcast frame carries an identifier of the second base station;
a fourth determining unit 512b, configured to determine, according to the second broadcast frame received by the first receiving unit 511b and the map model, that the mobile terminal is moved from the first space in which the mobile terminal is located to the second space;
a second receiving unit 513b, configured to receive a first broadcast frame sent by the first base station, where
the first broadcast frame carries an identifier of the first base station; and
a fifth determining unit 514b, configured to determine, according to the first broadcast frame received by the second receiving unit and the map model, that the mobile terminal is located in the first space.

Optionally, at least two base stations exist in the first space and the second space; and as shown in FIG. 7c, the positioning module 51 may further include:
a first sending unit 511c, configured to send a third broadcast frame, where
the third broadcast frame carries an identifier and an address of the mobile terminal;
a sixth determining unit 512c, configured to receive location information of the second base station sent by the second base station, and determine, according to the location information of the second base station, that the mobile terminal is moved from the first space in which the mobile terminal is located to the second space, where
the location information of the second base station is sent by the second base station when the second base station receives the third broadcast frame;
a second sending unit 513c, configured to send the third broadcast frame, where
the third broadcast frame carries an identifier and an address of the mobile terminal, where,
the second sending unit 513c and the first sending unit 511c may be a same module in the mobile terminal 50; and
a seventh determining unit 514c, configured to receive location information of the first base station sent by the first base station, and determine, according to the location information of the first base station, that the mobile terminal is located in the first space, where
the location information of the first base station is sent by the first base station when the first base station receives the third broadcast frame.

It should be noted that, that the playback command is used to trigger the second playback device to play the first multimedia content from a start point that is determined according to the playback progress information includes: the playback command is used to trigger the second playback device to determine that a second time point obtained by subtracting preset duration from a first time point after the first time point is acquired by the second playback device according to the playback progress information is the start point, and trigger the second playback device to play the first multimedia content from the start point.

The acquiring an identifier and playback progress information of first multimedia content played by the first playback device includes:
acquiring, from a server or another mobile terminal, the identifier and the playback progress information of the first multimedia content played by the first playback device; or,
acquiring, from the mobile terminal or by using an Internet resource, the identifier and the playback progress information of the first multimedia content played by the first playback device.

It should be noted that, the mobile terminal 50 provided by this embodiment of the present invention can perform the steps in the foregoing method embodiments, and for details, refer to the foregoing method embodiments, which are not described herein again.

According to the mobile terminal provided by this embodiment of the present invention, the mobile terminal can automatically switch a playback device during a displacement process, which prevents the playback device from being switched by means of manual operation, so that the playback device is switched automatically instead of manually, thereby improving a speed of switching the playback device, and also saving time for a user. Further, after the mobile terminal is displaced, a playback device at an original location may be enabled to enter a sleep state, thereby reducing energy consumption of the playback device in a playback system. Further, multimedia content played by a playback device after the switching can also follow multimedia content played by the playback device before the switching.

An embodiment of the present invention further provides a mobile terminal 60, where the mobile terminal 60, at least one first playback device located in a first space, and at least one second playback device located in a second space form a wireless local area network, and as shown in FIG. 7d, the mobile terminal 60 includes:
a data generating module 61, configured to generate multimedia playback data, where
the multimedia playback data is multimedia content currently played by the mobile terminal;
a first data sending module 62, configured to determine that the mobile terminal is located in the first space, and send the multimedia playback data to the first playback device, so that the first playback device plays the multimedia content currently played by the mobile terminal; and
a second data sending module 63, configured to determine that the mobile terminal is moved from the first space in which the mobile terminal is located to the second space, and send the multimedia playback data to the second playback device, so that the second playback device plays the multimedia content currently played by the mobile terminal.

It should be noted that, the mobile terminal 60 provided by this embodiment of the present invention can perform the steps in the foregoing method embodiments, and for details, refer to the foregoing method embodiments, which are not described herein again.

According to the mobile terminal provided by this embodiment of the present invention, the mobile terminal can automatically switch a playback device during a displacement process, which prevents the playback device from being switched by means of manual operation, so that the playback device is switched automatically instead of manually, thereby improving a speed of switching the playback device, and also saving time for a user. The mobile terminal may also serve as a source device, so that a playback device in a space in which the mobile terminal is located and the mobile terminal play multimedia content synchronously.

An embodiment of the present invention further provides a mobile terminal 80, where the mobile terminal 80, at least one first playback device located in a first space, and at least one second playback device located in a second space form a wireless local area network. As shown in FIG. 8, the mobile terminal 80 includes: at least one processor 81, for example, a CPU, at least one network interface 84 or another user interface 83, a memory 85, and at least one communications bus 82. The communications bus 82 is configured to implement a connection and communication between these components. Optionally, the mobile terminal 80 further includes a display, a keyboard, or a clicking device (for example, a mouse, a trackball (trackball), a touch panel, or a touch display screen). The memory 85 may include a RAM memory, or may include a non-volatile memory (non-volatile memory), for example, at least one disk memory.

In some implementation manners, the memory 85 stores an executable module or a data structure, or a subset thereof, or an extended set thereof.

The memory 85 stores an operating system 851 and/or an application 852; or, the processor stores an operating system 851 and/or an application 852.

The operating system 851 includes various system programs used to implement various basic services and process a hardware-based task.

The application 852 includes various applications used to implement various application services.

Specifically, the application 852 includes but is not limited to: a positioning module 51, an acquiring module 52, and a sending module 53.

Optionally, the application 852 includes but is not limited to: a first acquiring unit 511, a sending unit 512, a receiving unit 513, and a first determining unit 514.

Optionally, the application 852 further includes: a second acquiring unit 515, a third acquiring, unit 516, and a second determining unit 517.

Optionally, the application 852 further includes: a request sending unit 511a and a third determining unit 512a.

Optionally, the application 852 further includes: a first receiving unit 511b and a fourth determining unit 512b.

Optionally, the application 852 further includes: a second receiving unit 513b and a fifth determining unit 514b.

Optionally, the application 852 further includes: a first sending unit 511c and a sixth determining unit 512c.

Optionally, the application 852 further includes: a second sending unit 513c and a seventh determining unit 514c.

For specific implementations of the modules and the units included in the application 852, refer to corresponding modules and units in the embodiments shown in FIG. 5, FIG. 6, and FIG. 7, which are not described herein again.

For specific implementations of the modules and the units included in the application 852, refer to corresponding modules and units in the embodiments shown in FIG. 7a, FIG. 7b, and FIG. 7c, which are not described herein again.

The processor 81 is configured to execute the following:
determining that the mobile terminal 80 is moved from the first space in which the mobile terminal is located to the second space, and acquiring an identifier and playback progress information of first multimedia content played by the first playback device; and
sending, to the second playback device, a playback command carrying the identifier and the playback progress information of the first multimedia content, where the playback command is used to trigger the second playback device to play the first multimedia content from a start point that is determined according to the playback progress information.

Optionally, the wireless local area network further includes at least one wireless access point.

The processor 81 is specifically configured to acquire positioning information of a location of the mobile terminal 80 by using a gyroscope of the mobile terminal 80, where the positioning information includes three-dimensional coordinates of the mobile terminal 80; send the positioning information to the wireless access point through the network interface 84; and receive, through the network interface 84, location information sent by the wireless access point, and determine, according to the location information, that the mobile terminal 80 is moved from the first space in which the mobile terminal 80 is located to the second space, where the location information is determined by the wireless access point according to the positioning information sent by the mobile terminal 80.

Optionally, the processor 81 is specifically further configured to acquire displacement information in a specified time period by using a gyroscope of the mobile terminal 80, and acquire a map model according to the displacement information, where the map model is used to indicate topographic data of an indoor space in which the mobile terminal is located; acquire positioning information of a location of the mobile terminal 80 by using the gyroscope, where the positioning information includes three-dimensional coordinates of the mobile terminal 80; and determine, according to the positioning information and the map model, that the mobile terminal 80 is moved from the first space in which the mobile terminal 80 is located to the second space.

Optionally, the processor 81 is specifically further configured to send a scan request message when the mobile terminal 80 receives a broadcast message, where the broadcast information is broadcast by the second playback device; and receive, by the mobile terminal 80, a scan response message, and determine, according to the scan response message, that the mobile terminal 80 is moved from the first space in which the mobile terminal 80 is located to the second space, where the scan response message is generated and sent by the second playback device according to the scan request message.

Optionally, at least two base stations exist in the first space and the second space, where a first base station is located in the first space, and a second base station is located in the second space, and the map model is further used to indicate an indoor location of a base station. The processor 81 is specifically further configured to receive, by the mobile terminal 80, a second broadcast frame sent by the second base station, where the second broadcast frame carries an identifier of the second base station; and determine, by the mobile terminal 80, according to the second broadcast frame and the map model, that the mobile terminal is moved from the first space in which the mobile terminal is located to the second space.

Optionally, the processor 81 is specifically further configured to receive, by the mobile terminal 80, a first broadcast frame sent by the first base station, where the first broadcast frame carries an identifier of the first base station; and determine, by the mobile terminal 80, according to the first broadcast frame and the map model, that the mobile terminal is located in the first space.

Optionally, at least two base stations exist in the first space and the second space, where a first base station is located in the first space, and a second base station located in the second space. The processor 81 is specifically further configured to send, by the mobile terminal 80, a third broadcast frame, where the third broadcast frame carries an identifier and an address of the mobile terminal; and receive, by the mobile terminal 80, location information of the second base station sent by the second base station, and determine, according to the location information of the second base station, that the mobile terminal is moved from the first space in which the mobile terminal is located to the second space, where the location information of the second base station is sent by the second base station when the second base station receives the third broadcast frame.

Optionally, the processor 81 is specifically further configured to send, by the mobile terminal 80, the third broadcast frame; and receive, by the mobile terminal 80, location information of the first base station sent by the first base station, and determine, according to the location information of the first base station, that the mobile terminal is located in the first space, where the location information of the first base station is sent by the first base station when the first base station receives the third broadcast frame.

Optionally, the processor 81 is further configured to: before sending, to the second playback device through the network interface 84, the playback command carrying the identifier and the playback progress information of the first multimedia content, send a wake-up command to the second playback device through the network interface 84, where the wake-up command is used to wake the second playback device up.

Optionally, the processor 81 is further configured to: before sending, to the second playback device through the network interface 84, the playback command carrying the identifier and the playback progress information of the first multimedia content, send a turn-off command to the first playback device through the network interface 84, where the turn-off command is used to trigger the first playback device to turn down playback volume in a preset time period until the playback volume is zero.

In this embodiment, that the playback command is used to trigger the second playback device to play the first multimedia content from a start point that is determined according to the playback progress information includes: the playback command is used to trigger the second playback device to determine that a second time point obtained by subtracting preset duration from a first time point after the first time point is acquired by the second playback device according to the playback progress information is the start point, and trigger the second playback device to play the first multimedia content from the start point.

The acquiring an identifier and playback progress information of first multimedia content played by the first playback device includes:
acquiring, from a server or another mobile terminal, the identifier and the playback progress information of the first multimedia content played by the first playback device; or,
acquiring, from the mobile terminal or by using an Internet resource, the identifier and the playback progress information of the first multimedia content played by the first playback device.

It should be noted that, the mobile terminal 80 provided by this embodiment of the present invention can perform the steps in the foregoing method embodiments, and for details, refer to the foregoing method embodiments, which are not described herein again.

According to the mobile terminal provided by this embodiment of the present invention, the mobile terminal can automatically switch a playback device during a displacement process, which prevents the playback device from being switched by means of manual operation, so that the playback device is switched automatically instead of manually, thereby improving a speed of switching the playback device, and also saving time for a user. Further, after the mobile terminal is displaced, a playback device at an original location may be enabled to enter a sleep state, thereby reducing energy consumption of the playback device in a playback system. Further, multimedia content played by a playback device after the switching can also follow multimedia content played by the playback device before the switching.

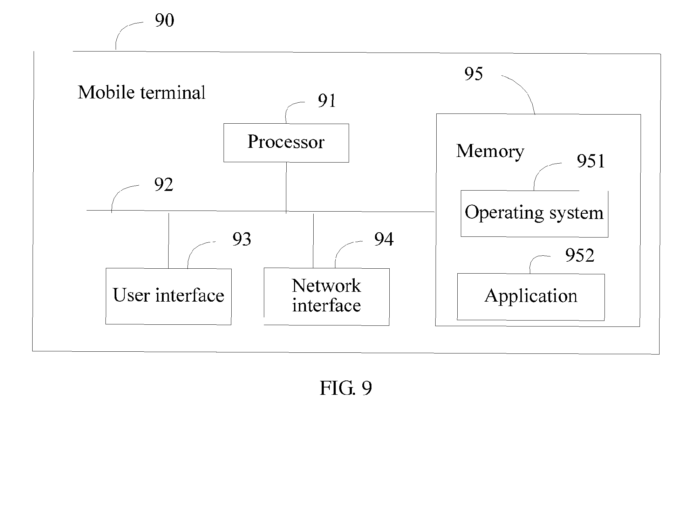

An embodiment of the present invention further provides a mobile terminal 90, where the mobile terminal 90, at least one first playback device located in a first space, and at least one second playback device located in a second space form a wireless local area network. As shown in FIG. 9, the mobile terminal 90 includes: at least one processor 91 (for example, a CPU), at least one network interface 94 or another user interface 93, a memory 95, and at least one communications bus 92. The communications bus 92 is configured to implement a connection and communication between these components. Optionally, the mobile terminal 90 further includes a display, a keyboard, or a clicking device (for example, a mouse, a trackball (trackball), a touch panel, or a touch display screen). The memory 95 may include a RAM memory, or may include a non-volatile memory (non-volatile memory), for example, at least one disk memory.

In some implementation manners, the memory 95 stores an executable module or a data structure, or a subset thereof, or an extended set thereof.

The memory 95 stores an operating system 951 and/or an application 952; or, the processor stores an operating system 951 and/or an application 952.

The operating system 951 includes various system programs used to implement various basic services and process a hardware-based task.

The application 952 includes various applications used to implement various application services.

Specifically, the application 952 includes but is not limited to: a data generating module 61, a first data sending module 62, and a second data sending module 63.

For specific implementations of the modules and the units included in the application 952, refer to corresponding modules in the embodiment shown in FIG. 7d, which are not described herein again.

The processor 91 is configured to execute the following operations:
generating multimedia playback data, where the multimedia playback data is multimedia content currently played by the mobile terminal 90;
determining that the mobile terminal is located in the first space, and sending the multimedia playback data to the first playback device through the network interface 94, so that the first playback device plays the multimedia content currently played by the mobile terminal 90; and
determining that the mobile terminal 90 is moved from the first space in which the mobile terminal 90 is located to the second space, and sending the multimedia playback data to the second playback device through the network interface 94, so that the second playback device plays the multimedia content currently played by the mobile terminal 90.

According to the mobile terminal provided by this embodiment of the present invention, the mobile terminal can automatically switch a playback device during a displacement process, which prevents the playback device from being switched by means of manual operation, so that the playback device is switched automatically instead of manually, thereby improving a speed of switching the playback device, and also saving time for a user. The mobile terminal may also serve as a source device, so that a playback device in a space in which the mobile terminal is located and the mobile terminal play multimedia content synchronously.

The embodiments in this specification are all described in a progressive manner, for same or similar parts in the embodiments, refer to these embodiments, and each embodiment focuses on a difference from other embodiments. Especially, a device embodiment is basically similar to a method embodiment, and therefore is described briefly; and for related parts, refer to partial descriptions in the method embodiment.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may be a magnetic disk, an optical disc, a read-only memory (the English full name: Read-Only Memory, ROM for short), or a random access memory (the English full name: Random Access Memory, RAM for short).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for switching a playback device, used in a mobile terminal, wherein the mobile terminal, at least one first playback device located in a first space, and at least one second playback device located in a second space form a wireless local area network, and the method comprises:
determining, by the mobile terminal, that the mobile terminal is moved from the first space in which the mobile terminal is located to the second space, and acquiring an identifier and playback progress information of first multimedia content played by the first playback device; and
sending, by the mobile terminal, to the second playback device, a playback command carrying the identifier and the playback progress information of the first multimedia content, wherein the playback command is used to trigger the second playback device to play the first multimedia content from a start point that is determined according to the playback progress information.

2. The method for switching a playback device according to claim 1, wherein the wireless local area network further comprises at least one wireless access point; and
the determining, by the mobile terminal, that the mobile terminal is moved from the first space in which the mobile terminal is located to the second space comprises:
acquiring, by the mobile terminal, positioning information of a location of the mobile terminal by using a gyroscope, wherein the positioning information comprises three-dimensional coordinates of the mobile terminal;
sending, by the mobile terminal, the positioning information to the wireless access point; and
receiving, by the mobile terminal, location information sent by the wireless access point, and determining, according to the location information, that the mobile terminal is moved from the first space in which the mobile terminal is located to the second space, wherein the location information is determined by the wireless access point according to the positioning information sent by the mobile terminal.

3. The method for switching a playback device according to claim 1, wherein the determining, by the mobile terminal, that the mobile terminal is moved from the first space in which the mobile terminal is located to the second space comprises:
acquiring, by the mobile terminal, displacement information in a specified time period by using a gyroscope, and acquiring a map model according to the displacement information, wherein the map model is used to indicate topographic data of an indoor space in which the mobile terminal is located;
acquiring, by the mobile terminal, positioning information of a location of the mobile terminal by using the gyroscope, wherein the positioning information comprises three-dimensional coordinates of the mobile terminal; and
determining, by the mobile terminal according to the positioning information and the map model, that the mobile terminal is moved from the first space in which the mobile terminal is located to the second space.

4. The method for switching a playback device according to any one of claims 1 to 3, wherein before the sending, by the mobile terminal, to the second playback device, a playback command carrying the identifier and the playback progress information of the first multimedia content, the method further comprises:
sending, by the mobile terminal, a wake-up command to the second playback device, wherein the wake-up command is used to wake the second playback device up.

5. The method for switching a playback device according to any one of claims 1 to 3, wherein before the sending, by the mobile terminal, to the second playback device, a playback command carrying the identifier and the playback progress information of the first multimedia content, the method further comprises:
sending, by the mobile terminal, a turn-off command to the first playback device, wherein the turn-off command is used to trigger the first playback device to turn down playback volume in a preset time period until the playback volume is zero.

6. The method for switching a playback device according to any one of claims 1 to 5, wherein:
that the playback command is used to trigger the second playback device to play the first multimedia content from a start point that is determined according to the playback progress information comprises:
the playback command is used to trigger the second playback device to determine that a second time point obtained by subtracting preset duration from a first time point after the first time point is acquired by the second playback device according to the playback progress information is the start point, and trigger the second playback device to play the first multimedia content from the start point.

7. The method for switching a playback device according to any one of claims 1 to 5, wherein the determining, by the mobile terminal, that the mobile terminal is moved from the first space in which the mobile terminal is located to the second space comprises:
sending, by the mobile terminal, a scan request message when receiving a broadcast message, wherein the broadcast information is broadcast by the second playback device; and
receiving, by the mobile terminal, a scan response message, and determining, according to the scan response message, that the mobile terminal is moved from the first space in which the mobile terminal is located to the second space, wherein the scan response message is generated and sent by the second playback device according to the scan request message.

8. The method for switching a playback device according to any one of claims 1 to 5, wherein at least two base stations exist in the first space and the second space, wherein a first base station is located in the first space, and a second base station is located in the second space, and the map model is further used to indicate an indoor location of a base station; and
the determining, by the mobile terminal, that the mobile terminal is moved from the first space in which the mobile terminal is located to the second space comprises:
receiving, by the mobile terminal, a second broadcast frame sent by the second base station, wherein the second broadcast frame carries an identifier of the second base station; and
determining, by the mobile terminal according to the second broadcast frame and the map model, that the mobile terminal is moved from the first space in which the mobile terminal is located to the second space.

9. The method for switching a playback device according to claim 8, wherein before the determining, by the mobile terminal, that the mobile terminal is moved from the first space to the second space, the method further comprises:
receiving, by the mobile terminal, a first broadcast frame sent by the first base station, wherein the first broadcast frame carries an identifier of the first base station; and
determining, by the mobile terminal according to the first broadcast frame and the map model, that the mobile terminal is located in the first space.

10. The method for switching a playback device according to any one of claims 1 to 5, wherein at least two base stations exist in the first space and the second space, wherein a first base station is located in the first space, and a second base station is located in the second space; and
the determining, by the mobile terminal, that the mobile terminal is moved from the first space in which the mobile terminal is located to the second space comprises:
sending, by the mobile terminal, a third broadcast frame, wherein the third broadcast frame carries an identifier and an address of the mobile terminal; and
receiving, by the mobile terminal, location information of the second base station sent by the second base station, and determining, according to the location information of the second base station, that the mobile terminal is moved from the first space in which the mobile terminal is located to the second space, wherein the location information of the second base station is sent by the second base station when the second base station receives the third broadcast frame.

11. The method for switching a playback device according to claim 10, wherein before the determining, by the mobile terminal, that the mobile mobile terminal is moved from the first space to the second space, the method further comprises:
sending, by the mobile terminal, the third broadcast frame; and
receiving, by the mobile terminal, location information of the first base station sent by the first base station, and determining, according to the location information of the first base station, that the mobile terminal is located in the first space, wherein the location information of the first base station is sent by the first base station when the first base station receives the third broadcast frame.

12. A method for switching a playback device, used in a mobile terminal, wherein the mobile terminal, at least one first playback device located in a first space, and at least one second playback device located in a second space form a wireless local area network, and the method comprises:
generating, by the mobile terminal, multimedia playback data, wherein the multimedia playback data is multimedia content currently played by the mobile terminal;
determining, by the mobile terminal, that the mobile terminal is located in the first space, and sending the multimedia playback data to the first playback device, so that the first playback device plays the multimedia content currently played by the mobile terminal; and
determining, by the mobile terminal, that the mobile terminal is moved from the first space in which the mobile terminal is located to the second space, and sending the multimedia playback data to the second playback device, so that the second playback device plays the multimedia content currently played by the mobile terminal.

13. A mobile terminal, wherein the mobile terminal, at least one first playback device located in a first space, and at least one second playback device located in a second space form a wireless local area network, and the mobile terminal comprises:
a positioning module, configured to determine a location of the mobile terminal;
an acquiring module, configured to determine, by using the positioning module, that the mobile terminal is moved from the first space in which the mobile terminal is located to the second space, and acquire an identifier and playback progress information of first multimedia content played by the first playback device; and
a sending module, configured to send, to the second playback device, a playback command carrying the identifier and the playback progress information of the first multimedia content, wherein the playback command is used to trigger the second playback device to play the first multimedia content from a start point that is determined according to the playback progress information.

14. The mobile terminal according to claim 13, wherein the wireless local area network further comprises at least one wireless access point; and
the positioning module comprises:
a first acquiring unit, configured to acquire positioning information of the location of the mobile terminal by using a gyroscope, wherein the positioning information comprises three-dimensional coordinates of the mobile terminal;
a sending unit, configured to send the positioning information acquired by the first acquiring, unit to the wireless access point;
a receiving unit, configured to receive location information sent by the wireless access point, wherein the location information is determined by the wireless access point according to the positioning information sent by the mobile terminal; and
a first determining unit, configured to determine the location of the mobile terminal according to the location information received by the receiving unit.

15. The mobile terminal according to claim 14, wherein the positioning module comprises:
a second acquiring unit, configured to acquire displacement information in a specified time period by using a gyroscope, and acquire a map model according to the displacement information, wherein the map model is used to indicate topographic data of an indoor space in which the mobile terminal is located;
a third acquiring unit, configured to acquire positioning information of the location of the mobile terminal by using the gyroscope, wherein the positioning information comprises three-dimensional coordinates of the mobile terminal; and
a second determining unit, configured to determine the location of the mobile terminal according to the map model acquired by the second acquiring unit and the positioning information acquired by the third acquiring unit.

16. The mobile terminal according to any one of claims 13 to 15, wherein the sending unit is further configured to: before sending, to the second playback device, the playback command carrying the identifier and the playback progress information of the first multimedia content, send a wake-up command to the second playback device, wherein the wake-up command is used to wake the second playback device up.

17. The mobile terminal according to any one of claims 13 to 15, wherein the sending unit is further configured to: before sending, to the second playback device, the playback command carrying the identifier and the playback progress information of the first multimedia content, send a turn-off command to the first playback device, wherein the turn-off command is used to trigger the first playback device to turn down playback volume in a preset time period until the playback volume is zero.

18. The mobile terminal according to any one of claims 13 to 17, wherein that the playback command is used to trigger the second playback device to play the first multimedia content from a start point that is determined according to the playback progress information comprises:
the playback command is used to trigger the second playback device to determine that a second time point obtained by subtracting preset duration from a first time point after the first time point is acquired by the second playback device according to the playback progress information is the start point, and trigger the second playback device to play the first multimedia content from the start point.

19. The mobile terminal according to any one of claims 13 to 17, wherein the positioning module comprises:
a request sending unit, configured to send a scan request message when a broadcast message is received, wherein the broadcast information is broadcast by the second playback device; and
a third determining unit, configured to receive a scan response message, and determine, according to the scan response message, that the mobile terminal is moved from the first space in which the mobile terminal is located to the second space, wherein the scan response message is generated and sent by the second playback device according to the scan request message.

20. The mobile terminal according to any one of claims 13 to 17, wherein at least two base stations exist in the first space and the second space, wherein a first base station is located in the first space, and a second base station is located in the second space, and the map model is further used to indicate an indoor location of a base station; and
the positioning module comprises:
a first receiving unit, configured to receive a second broadcast frame sent by the second base station, wherein the second broadcast frame carries an identifier of the second base station; and
a fourth determining unit, configured to determine, according to the second broadcast frame received by the first receiving unit and the map model, that the mobile terminal is moved from the first space in which the mobile terminal is located to the second space.

21. The mobile terminal according to claim 20, wherein the positioning module further comprises:
a second receiving unit, configured to receive a first broadcast frame sent by the first base station, wherein the first broadcast frame carries an identifier of the first base station; and
a fifth determining unit, configured to determine, according to the first broadcast frame received by the second receiving unit and the map model, that the mobile terminal is located in the first space.

22. The mobile terminal according to any one of claims 11 to 15, wherein at least two base stations exist in the first space and the second space, wherein a first base station is located in the first space, and a second base station is located in the second space; and
the positioning module comprises:
a first sending unit, configured to send a third broadcast frame, wherein the third broadcast frame carries an identifier and an address of the mobile terminal; and
a sixth determining unit, configured to receive location information of the second base station sent by the second base station, and determine, according to the location information of the second base station, that the mobile terminal is moved from the first space in which the mobile terminal is located to the second space, wherein the location information of the second base station is sent by the second base station when the second base station receives the third broadcast frame.

23. The mobile terminal according to claim 22, wherein the positioning module further comprises:
a second sending unit, configured to send the third broadcast frame; and
a seventh determining unit, configured to receive location information of the first base station sent by the first base station, and determine, according to the location information of the first base station, that the mobile terminal is located in the first space, wherein the location information of the first base station is sent by the first base station when the first base station receives the third broadcast frame.

24. A mobile terminal, wherein the mobile terminal, at least one first playback device located in a first space, and at least one second playback device located in a second space form a wireless local area network, and the mobile terminal comprises:
a data generating module, configured to generate multimedia playback data, wherein the multimedia playback data is multimedia content currently played by the mobile terminal;
a first data sending module, configured to determine that the mobile terminal is located in the first space, and send the multimedia playback data to the first playback device, so that the first playback device plays the multimedia content currently played by the mobile terminal; and
a second data sending module, configured to determine that the mobile terminal is moved from the first space in which the mobile terminal is located to the second space, and send the multimedia playback data to the second playback device, so that the second playback device plays the multimedia content currently played by the mobile terminal.
